(19) Europäisches Patentamt
European Patent Office
Office européen des brevets

(11) EP 2 009 723 A1

(12) **EUROPEAN PATENT APPLICATION**
published in accordance with Art. 153(4) EPC

(43) Date of publication:
**31.12.2008 Bulletin 2009/01**

(21) Application number: **07740779.9**

(22) Date of filing: **27.03.2007**

(51) Int Cl.:
***H01M 8/02*** *(2006.01)* ***C08J 5/22*** *(2006.01)*
***H01B 1/06*** *(2006.01)* ***H01B 13/00*** *(2006.01)*
***H01M 8/10*** *(2006.01)*

(86) International application number:
**PCT/JP2007/057343**

(87) International publication number:
**WO 2007/114406 (11.10.2007 Gazette 2007/41)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **27.03.2006 JP 2006086261**

(71) Applicant: **Toyota Jidosha Kabushiki Kaisha**
**Toyota-shi, Aichi 471-8571 (JP)**

(72) Inventors:
- **KATAYAMA, Yukihisa**
**Toyota-shi, Aichi 471-8571 (JP)**
- **HOSOKAWA, Yoichi**
**Aichi-gun, Aichi 480-1192 (JP)**
- **TAKAHASHI, Yuka**
**Aichi-gun, Aichi 480-1192 (JP)**
- **SHAFER, Greg**
**New York 1403-09710 (US)**
- **HASEGAWA, Naoki**
**Aichi-gun, Aichi 480-1192 (JP)**

(74) Representative: **Kuhnen & Wacker**
**Patent- und Rechtsanwaltsbüro**
**Prinz-Ludwig-Strasse 40A**
**85354 Freising (DE)**

(54) **COMPOSITE ELECTROLYTE MEMBRANE COMPRISING IMIDE NETWORK POLYMER CROSSLINKED WITH STRONGLY ACIDIC GROUP, METHOD FOR MANUFACTURING THE COMPOSITE ELECTROLYTE MEMBRANE, AND FUEL CELL**

(57) It is an object of the present invention to
(1) improve strength and durability further,
(2) achieve a larger area, and
(3) facilitate handling at the time of membrane synthesis,
by performing compounding with an imido-network polymer that is a high-density electrolyte material. As a result, a composite electrolyte membrane having high ion conductivity can be formed and the composite electrolyte membrane can be made applicable to a solid polymer fuel cell, whereby a high-performance fuel cell can be realized.
According to the present invention, the above object can be achieved by improving the filling rate of a porous membrane with an imido-network polymer.

Fig. 1

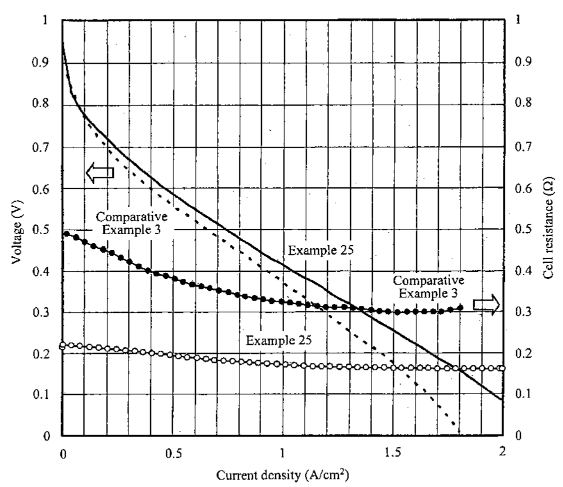


EP 2 009 723 A1

## Description

### TECHNICAL FIELD

The present invention relates to a composite electrolyte membrane having an imido-network polymer cross-linked with strongly-acidic groups, a method for manufacturing the same, and a fuel-cell including the composite electrolyte membrane. More specifically, the present invention relates to a composite electrolyte membrane used in various electrochemical devices, such as a fuel cell, a water electrolyzer, a halogen acid electrolyzer, a brine electrolyzer, an oxygen and/or hydrogen concentrator, a humidity sensor, and a gas sensor, a method for manufacturing the composite electrolyte membrane, and a fuel cell using the composite electrolyte membrane as a polymer electrolyte.

### BACKGROUND ART

A solid polymer electrolyte is a solid polymer material having an electrolyte group, such as a sulfonic acid group, in a polymer chain thereof. Since such solid polymer electrolyte has properties of solidly binding to specific ions and selectively transmitting positive ions or negative ions, it is made in the shape of particles, a fabric, or a membrane, and it is then used for many purposes such as electrodialysis, diffusion dialysis, or a battery separating membrane.

For example, in various electrochemical devices, such as solid polymer fuel cells or water electrolyzers, the solid polymer electrolyte is made in the shape of a membrane and it is then used in a membrane electrode assembly (MEA) in which electrodes are attached to both sides of the electrolyte. Further, in the case of such solid polymer fuel cell, an electrode generally has a two-layer structure of a diffusion layer and a catalyst layer. The diffusion layer is used for supplying reactant gas and electrons to the catalyst layer, and carbon fiber, carbon paper, or the like is used as such diffusion layer. The catalyst layer is the site of electrode reaction, and it is generally a compound material of electrode catalyst and solid polymer electrolyte.

Various types of fluorine-based electrolyte, as typified by Nafion (registered trade name) manufactured by Dupont co. ltd., or various types of hydrocarbon-based electrolyte is known as such solid polymer electrolyte used in such various electrochemical devices. The performance of such electrochemical devices depends on the performance of the solid polymer electrolyte used therein, and generally, the performance of the electrochemical devices improves as the electric conductivity of the solid polymer electrolyte becomes higher.

In order to improve the electric conductivity of the solid polymer electrolyte, normally, a method for increasing the quantity of acid groups (sulfonic acid group, for example) in the solid polymer electrolyte is used. However, generally, the larger the quantity of acid groups in the solid polymer electrolyte, the more likely the solid polymer electrolyte is to be swollen due to water or to become soluble in water. Therefore, in accordance with such a method, a solid polymer electrolyte having excellent durability and heat resistance cannot be obtained.

Further, for example, in the case of a solid polymer fuel-cell, an electrolyte membrane prior to operation is in a dry state. In contrast, once the fuel cell is actuated, the membrane becomes swollen due to humidification water contained in reactant gas or water generated by the cell reaction. Thus, if the initiation/shutdown of the solid polymer fuel cell is repeated, the swelling/shrinking of the membrane is repeated. As a result, rupture of the solid polymer electrolyte membrane or separation of an electrode from the solid polymer electrolyte membrane may be caused, which is a cause of performance deterioration.

In order to solve such problems, conventionally, various suggestions have been made. For example, JP Patent Publication (Kokai) No.2002-246041 A discloses a polymer electrolyte membrane that can be obtained by adding hexamethylenediamine (polyfunctional basic compound) to ethanol solution containing polymer electrolyte and by casting the mixture. The document discloses that, by adding such polyfunctional basic compound to the polymer electrolyte, the polyfunctional basic compound is ionically bonded to part of ionomer sulfonic acid groups, whereby a three-dimensional network is formed and the outflow of ionomer is suppressed.

JP Patent Publication (Kokai) No.2000-188013 A discloses a highly heat resistive polymer electrolyte in which a perfluoro-based polymer compound is cross-linked via strongly-acidic crosslinking groups composed of bis-sulfonylimide groups, sulfonylcarbonylimide groups, bis-carbonylimide groups, or bis-sulfonylmethylene groups. The document discloses that, by allowing sulfonamide sodium salt of perfluoro-1,4-disulfonylfluoride butane and hexamethyldisilazane to react with each other so as to synthesize a crosslinking agent and by allowing the agent to react with Nafion (registered trade name), Nafion (registered trade name) can be cross-linked via bis-sulfonylimide groups, and high-temperature creep resistance of the membrane can be improved as a result.

Further, JP Patent Publication (Kohyo) No.2002-516348 A discloses that a cross-linked polymer whose polymer main chain is cross-linked with bis-sulfonylimide groups can be obtained by allowing sulfonated chloride polyether ether ketone (PEEK-$SO_2Cl$) and $NH_2SO_2(CF_2)_4SO_2NH_2$ to react with each other. The document discloses the water absorption ability of such cross-linked polymer is decreased as compared with non-crosslinked material, and that conductivity measured at room temperature is 0.065 S/cm.

Further, JP Patent Publication (Kohyo) No.2002-516348 A discloses a method for reforming an electrolyte. In accordance with the method, an amine compound is brought into contact with a perfluoro-polymer electrolyte or its precursor. The document discloses that the creep resistance can be improved while maintaining relatively high electric conductivity, by bringing an amine compound, such as ammonia or lithium bis(trimethylsilyl) amide, into contact with a Nafion (registered trade name) membrane.

The invention disclosed in JP Patent Publication (Kokai) No.2002-246041 A prevents elution by cross-linking electrolyte with ionic crosslinking. It is true that, by adding a polyfunctional basic compound to solid polymer electrolyte, the polymer chain can be ionically cross-linked via acid groups of the solid polymer electrolyte. However, ionic bond is easily broken under an environment where water exists. Thus, when such membrane is used as a fuel-cell electrolyte membrane or as an electrolyte in a catalyst layer, for example, over an extended time period, there is a possibility that the ionic bond is broken due to water that exists in the network, resulting in the outflow of polymer.

In contrast, in the inventions disclosed in JP Patent Publication (Kokai) No.2000-188013 A and Publication (Kohyo) No.2002-516348 A, the crosslinking groups between ionomers are allowed to have strong acidity and a function of inhibiting swelling. It is true that when a polymer chain of the solid polymer electrolyte is molecularly cross-linked with a predetermined crosslinking agent, all the crosslinking points are composed of covalent bonding. Thus, membrane swelling/shrinking with respect to water can be suppressed, and therefore, even when used in an environment where water exists over an extended time period, the possibility of polymer flowing out is low. Further, membrane strength is improved due to crosslinking, whereby the heat resistance and durability are improved.

However, in accordance with the method by which solid polymer electrolyte is molecularly cross-linked, there is a limit to a reachable crosslink density. For example, in the case of a solid polymer electrolyte of which equivalent weight (EW) is 1000, the crosslink density is 0.5 mmol/g at a maximum in theory.

Further, as disclosed in JP Patent Publication (Kohyo) No.2002-516348 A, in accordance with the method using ammonia or the like for crosslinking, since one bis-sulfonylimide group is generated from two sulfonic acid groups, the decreasing rate of electric conductivity becomes greater along with an increase in crosslink density. Thus, in accordance with such a conventional method, it is difficult to increase both crosslink density and electric conductivity at the same time.

The inventions disclosed in JP Patent Publication (Kokai) No.2002-246041 A, JP Patent Publication (Kokai) No.2000-188013 A, JP Patent Publication (Kohyo) No.2002-516348 A, and JP Patent Publication (Kohyo) No. 2002-516348 A are problematic in that each of the electrolytes is hard to realize as a thin membrane (several dozen μm to 100 μm) of a single material and it is difficult to form a composite membrane with other material if such condensation polymerization material is used. Also, in addition to the fact that each of the electrolytes has high water absorptivity and thus it is easily swollen, it does not have sufficient strength to be formed as a membrane. Thus, such electrolytes are not satisfactory for the fuel-cell polymer electrolyte membranes and the like.

Thus, a mode of a self-sustained membrane in which the electrolyte membrane is sustained by itself is very important, in considering its application to a fuel cell and the like.

In this regard, JP Patent Publication (Kokai) No.2005-174800 A discloses a solid polymer electrolyte having both high crosslink density and high electric conductivity. The solid polymer electrolyte is obtained by reacting a first monomer that has a molecular weight of 10,000 or less and that contains n ($n \geqq 2$) reactive functional groups A and/or reactive functional groups B in one molecule, and a second monomer that has a molecular weight of 10,000 or less and that contains m ($m \geqq 3$, $m \neq n$) reactive functional groups A and/or reactive functional groups B in one molecule, at least one reactive functional group A and at least one reactive functional group B being contained in either the first monomer or the second monomer. In the document, it is preferable that either one or more kinds of the first monomer or one or more kinds of the second monomer contain at least two reactive functional groups A and at least two reactive functional groups B.

While the solid polymer electrolyte disclosed in JP Patent Publication (Kokai) No.2005-174800 A is an excellent solid polymer electrolyte having both high crosslink density and high electric conductivity, it is conceivable that compounding is performed using the solid polymer electrolyte, which is a high-density electrolyte material, so as to

(1) improve strength and durability further,
(2) achieve a larger area, and
(3) facilitate handling at the time of membrane synthesis.

SUMMARY OF THE INVENTION

PROBLEMS TO BE SOLVED BY THE INVENTION

Thus, it is an object of the present invention to

(1) improve strength and durability further,
(2) achieve a larger area, and
(3) facilitate handling at the time of membrane synthesis,
by performing compounding with an imido-network polymer that is a high-density electrolyte material. As a result, a composite electrolyte membrane having high ion conductivity can be formed and the composite electrolyte membrane can be made applicable to a solid polymer fuel cell, whereby a high-performance fuel cell can be realized.

MEANS OF SOLVING THE PROBLEMS

As a result of intensive studies, the present inventors have found that the above problems can be solved by improving the filling rate of a porous membrane with an imido-network polymer, and thus the present invention has been achieved.

Namely, in a first aspect, the present invention is an invention of a composite electrolyte membrane composed of a porous membrane having pores filled with an imido-network polymer cross-linked with strongly-acidic groups. The imido-network polymer is obtained by allowing one or more kinds of a first monomer and one or more kinds of a second monomer that satisfy the following conditions to react with each other.

(1) The first monomer has a molecular weight of 10,000 or less, and n ($n \geqq 2$) reactive functional groups A and/or reactive functional groups B are contained in one molecule.
(2) The second monomer has a molecular weight of 10,000 or less, and m ($m \geqq 3$, $m \neq n$) reactive functional groups A and/or reactive functional groups B are contained in one molecule.
(3) The reactive functional groups A and the reactive functional groups B can form one or more kinds of strongly-acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups.
(4) Either one or more kinds of the first monomer or one or more kinds of the second monomer contain at least one reactive functional group A and at least one reactive functional group B.

Since the composite electrolyte membrane of the present invention is a composite electrolyte of a porous membrane and imido-network polymer, the membrane can be made as thin as several dozen μm or less, which has been difficult to achieve with the imido-network polymer alone due to its fragility. Further, since the filling rate of pores of the porous membrane with the imido-network polymer cross-linked with strongly-acidic groups is high, the membrane exhibits high proton conductivity.

In the present invention, it is preferable that either of each of the reactive functional groups A or each of the reactive functional groups B, which groups form strongly-acidic bonds, is composed of $-SO_2X$ or -COX (wherein X represents one or more kinds selected from F, Cl, Br, I, and OH), and the other is composed of $-SO_2NZ_1Z_2$ or $-CONZ_1Z_2$ (wherein each of $Z_1$ and $Z_2$ represents one or more kinds selected from H, M, and $SiMe_3$, and M represents a metal ion). Based on these reactive functional groups, one or more kinds of strongly-acidic bonds selected from a bis-sulfonimide group ($-SO_2NHSO_2-$), a sulfoncarbonimide group ($-SO_2NHCO-$), and a bis-carbonimide group (-CONHCO-), which are strongly-acidic groups, are formed.

By using the first monomer that has a molecular weight of 10,000 or less and that contains n ($n \geqq 2$) reactive functional groups A and/or reactive functional groups B in one molecule, and the second monomer that has a molecular weight of 10,000 or less and that contains m ($m \geqq 3$, $m \neq n$) reactive functional groups A and/or reactive functional groups B in one molecule, two or more kinds of electrolyte having different degrees of crosslinking are generated. As used herein, different degrees of crosslinking means different Young's moduli; that is, flexible polymer and rigid polymer are properly mixed.

In the present invention, there are various ways of allowing either the first monomer or the second monomer to contain the reactive functional groups A and reactive functional groups B. For example, it is preferable that either one or more kinds of the first monomer or one or more kinds of the second monomer contain at least two reactive functional groups A and at least two reactive functional groups B.

Preferably, specific examples of the first monomer that is a starting compound of a polyimido-network polymer in the composite electrolyte membrane of the present invention include any one or more kinds of monomers (1) to (18) expressed by the following chemical formulas, and specific examples of the second monomer include any one or more kinds of monomers (5) to (8) expressed by the following chemical formulas as well as any one or more kinds of monomers (15) to (18) expressed by the following formulas.

(1) $Z_1Z_2NO_2S(CF_2)_mSO_2NZ_1Z_2$ (2) $Z_1Z_2NOC(CF_2)_mCONZ_1Z_2$

(3) $XO_2S(CF_2)_mSO_2X$ (4) $XOC(CF_2)_mCOX$

[wherein m=1 to 20]

(5)

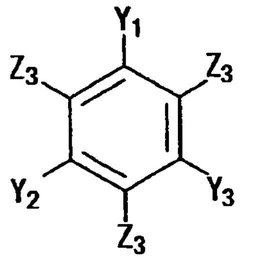

[wherein $Y_1$, $Y_2$, $Y_3$= $SO_2NZ_1Z_2$, $SO_2X$, $CONZ_1Z_2$, or COX, and $Y_1$=$Y_2$=$Y_3$]

(6) $P_1$-$CF_2$-$CFP_2$-$(CF_2)_A$-$CFP_3$-$CF_2$-$P_4$

(7) $P_1$-$(CF_2)_A$-$(CF_2CFP_2)_B$-$(CF_2)_C$-$P_3$

(8)

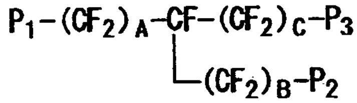

[wherein A=0 to 20, B=1 to 20, and C=1 to 20, $P_1$ $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(9) $Z_1Z_2NO_2S(CF_2)_mSO_2X$ (10) $Z_1Z_2NOC(CF_2)_mSO_2X$

(11) $XO_2S(CF_2)_mCOX$ (12) $XOC(CF_2)_mSO_2NZ_1Z_2$

(13) $Z_1Z_2NO_2S(CF_2)_mCONZ_1Z_2$ (14) $Z_1Z_2NOC(CF_2)_mCOX$

[wherein m=1 to 20]

(15)

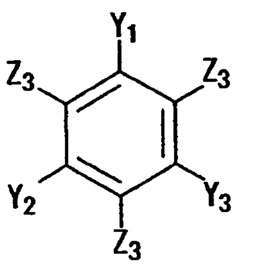

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1$-$CF_2$-$CFP_2$-$(CF_2)_A$-$CFP_3$-$CF_2$-$P_4$

(17) $P_1$-$(CF_2)_A$-$(CF_2CFP_2)_B$-$(CF_2)_C$-$P_3$

(18) 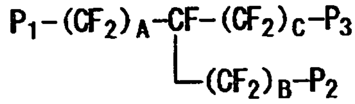

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

While both of the first monomer and the second monomer are used in the first invention, characteristics of the above composite electrolyte membrane of the present invention can be exhibited in cases in which specific reactive functional groups A and/or reactive functional groups B are contained in a third monomer. Namely, the present invention is an invention of a composite electrolyte membrane composed of a porous membrane having pores filled with an imido-network polymer cross-linked with strongly-acidic groups. The imido-network polymer can be obtained by reacting one or more kinds of the third monomer that satisfy the following conditions.

(1) The third monomer has a molecular weight of 10,000 or less, and p ($p \geqq 3$) reactive functional groups A and/or reactive functional groups B are contained in one molecule.
(2) The reactive functional groups A and the reactive functional groups B can form one or more kinds of strongly-acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups.
(3) One or more kinds of the third monomer contain at least one reactive functional group A and at least one reactive functional group B.

Preferably, the third monomer is two or more kinds of monomer containing reactive functional groups A and/or reactive functional groups B, the number of the groups being three in total in one molecule, and the monomer contains at least two reactive functional groups A and at least two reactive functional groups B.
Further, preferably, the third monomer is one or more kinds of monomer containing reactive functional groups A and/or reactive functional groups B, the number of the groups being four or more in total in one molecule, and the monomer contains at least two reactive functional groups A and at least two reactive functional groups B.
In the present invention, it is preferable that either of each of the reactive functional groups A or each of the reactive functional groups B, which groups form strongly-acidic bonds, is composed of $-SO_2X$ or -COX (wherein X represents one or more kinds selected from F, Cl, Br, I, and OH), and the other is composed of $-SO_2NZ_1Z_2$ or $-CONZ_1Z_2$ (wherein each of $Z_1$ and $Z_2$ represents one or more kinds selected from H, M, and $SiMe_3$, and M represents a metal ion). Based on these reactive functional groups, one or more kinds of strongly-acidic bond selected from a bis-sulfonimide group ($-SO_2NHSO_2-$), a sulfoncarbonimide group ($-SO_2NHCO-$), and a bis-carbonimide group (-CONHCO-), which are strongly-acidic groups, are formed.
Preferably, specific examples of the third monomer that is a starting compound of a polyimido-network polymer in the composite electrolyte membrane of the present invention include one or more kinds of monomers (5) to (8) and monomers (15) to (18) expressed by the following chemical formulas.

(5) 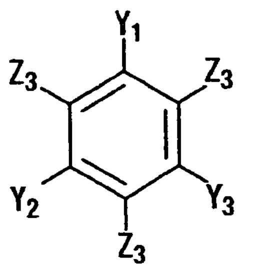

[wherein $Y_1$, $Y_2$, $Y_3$= $SO_2NZ_1Z_2$, $SO_2X$, $CONZ_1Z_2$, or COX, and $Y_1$=$Y_2$=$Y_3$]

(6) $P_1=CF_2\text{-}CFP_2\text{-}(CF_2)_A\text{-}CFP_3\text{-}CF_2\text{-}P_4$

(7) $P_1\text{-}(CF_2)_A\text{-}(CF_2CFP_2)_B\text{-}(CF_2)_C\text{-}P_3$

(8) 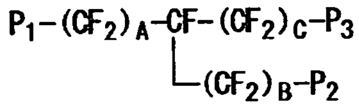

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(15) 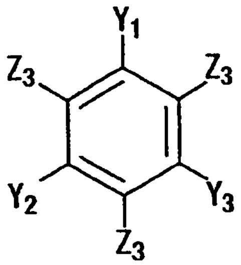

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1\text{-}CF_2\text{-}CFP_2\text{-}(CF_2)_A\text{-}CFP_3\text{-}CF_2\text{-}P_4$

(17) $P_1\text{-}(CF_2)_A\text{-}(CF_2CFP_2)_B\text{-}(CF_2)_C\text{-}P_3$

(18) 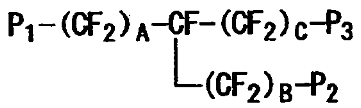

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

It is preferable that the crosslink density of the imido-network polymer in the composite electrolyte membrane of the present invention is 0.1 mmol/g or more.

An inorganic material, such as silica or alumina, or various polymer porous materials, can be used for a porous membrane that is a main constituent of the composite electrolyte membrane of the present invention.

Specifically, preferable examples of the porous membrane include one or more kinds selected from polyimide (PI), polyether ether ketone (PEEK), polyethyleneimide (PEI), polysulfone (PSF), polyphenylsulfone (PPSU), polyphenylene sulfide (PPS), and cross-linked polyethylene (CLPE).

Further, preferable examples of the porous membrane include polytetrafluoroethylene (PTFE) expressed by the following general formula and tetrafluoroethylene copolymer containing a copolymerization component of 10 mol% or less.

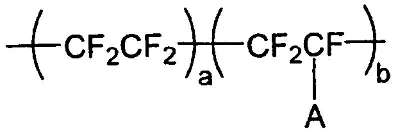

(wherein A represents one or more kinds selected from below, and a:b=1:0 to 9:1)
A= $-CF_3$
$-OCF_3$
$-OCF_2CF_2CF_3$

Further, preferably, examples of the porous membrane include polysiloxane, and an organic group in the polysiloxane is at least one kind of group selected from a methyl group, a phenyl group, a hydrogen group, and a hydroxyl group.

In a second aspect, the present invention is an invention of a method for manufacturing the above composite electrolyte membrane composed of a porous membrane having pores filled with an imido-network polymer. The method includes: a step of filling pores of the porous membrane with the first monomer and the second monomer that are basic ingredients of the imido-network polymer cross-linked with strongly-acidic groups; a step of forming the imido-network polymer in the pores of the porous membrane; and a step of protonating the imido-network polymer. The imido-network polymer cross-linked with strongly-acidic groups is obtained by allowing one or more kinds of the first monomer and one or more kinds of the second monomer that satisfy the following conditions to react with each other.

(1) The first monomer has a molecular weight of 10,000 or less, and n ($n \geqq 2$) reactive functional groups A and/or reactive functional groups B are contained in one molecule.
(2) The second monomer has a molecular weight of 10,000 or less, and m ($m \geqq 3$, $m \neq n$) reactive functional groups A and/or reactive functional groups B are contained in one molecule.
(3) The reactive functional groups A and the reactive functional groups B can form one or more kinds of strongly-acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups.
(4) Either one or more kinds of the first monomer or one or more kinds of the second monomer contain at least one reactive functional group A and at least one reactive functional group B.

Specific examples of the reactive functional groups A and the reactive functional groups B, and examples of the content of the first monomer and the second monomer regarding these reactive functional groups A and reactive functional groups B are as described above.

Preferably, specific examples of the first monomer include any one or more kinds of monomers (1) to (18) expressed by the following chemical formulas, and specific examples of the second monomer include any one or more kinds of monomers (5) to (8) and monomers (15) to (18) expressed by the following formulas.

(1) $Z_1Z_2NO_2S(CF_2)_mSO_2NZ_1Z_2$ (2) $Z_1Z_2NOC(CF_2)_mCONZ_1Z_2$

(3) $XO_2S(CF_2)_mSO_2X$ (4) $XOC(CF_2)_mCOX$

[wherein m=1 to 20]

(5)

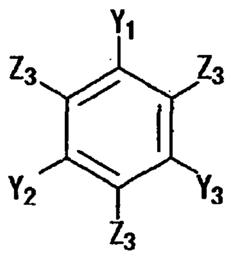

[wherein $Y_1$, $Y_2$, $Y_3$= $SO_2NZ_1Z_2$, $SO_2X$, $CONZ_1Z_2$, or COX, and $Y_1=Y_2=Y_3$]

(6) $P_1$-$CF_2$-$CFP_2$-$(CF_2)_A$-$CFP_3$-$CF_2$-$P_4$

(7) $P_1$-$(CF_2)_A$-$(CF_2CFP_2)_B$-$(CF_2)_C$-$P_3$

(8) 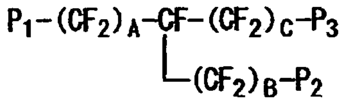

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(9) $Z_1Z_2NO_2S(CF_2)_mSO_2X$ (10) $Z_1Z_2NOC(CF_2)_mSO_2X$

(11) $XO_2S(CF_2)_mCOX$ (12) $XOC(CF_2)_mSO_2NZ_1Z_2$

(13) $Z_1Z_2NO_2S(CF_2)_mCONZ_1Z_2$ (14) $Z_1Z_2NOC(CF_2)_mCOX$

[wherein m=1 to 20]

(15) 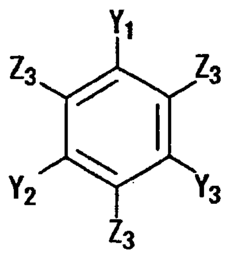

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1$-$CF_2$-$CFP_2$-$(CF_2)_A$-$CFP_3$-$CF_2$-$P_4$

(17) $P_1$-$(CF_2)_A$-$(CF_2CFP_2)_B$-$(CF_2)_C$-$P_3$

(18) 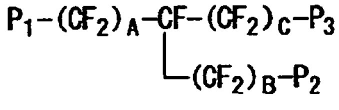

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

While both of the first monomer and the second monomer are used in the second invention, characteristics of the above composite electrolyte membrane of the present invention can be exhibited in cases in which specific reactive functional groups A and/or reactive functional groups B are contained in a third monomer. Namely, the present invention is a method for manufacturing a composite electrolyte membrane composed of a porous membrane having pores filled

with an imido-network polymer, and the method includes: a step of filling pores of the porous membrane with the third monomer that is a basic ingredient of the imido-network polymer cross-linked with strongly-acidic groups; a step of forming the imido-network polymer in the pores of the porous membrane; and a step of protonating the imido-network polymer. The imido-network polymer cross-linked with strongly-acidic groups is obtained by reacting one or more kinds of the third monomer that satisfy the following conditions.

(1) The third monomer has a molecular weight of 10,000 or less, and p ($p \geqq 3$) reactive functional groups A and/or reactive functional groups B are contained in one molecule.
(2) The reactive functional groups A and the reactive functional groups B can form one or more kinds of strongly-acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups.
(3) One or more kinds of the third monomer contain at least one reactive functional group A and at least one reactive functional group B.

Preferably, the third monomer is two or more kinds of monomer containing reactive functional groups A and/or reactive functional groups B, the number of the groups being three in total in one molecule, and the monomer contains at least two reactive functional groups A and at least two reactive functional groups B.
Further, preferably, the third monomer is one or more kinds of monomer containing reactive functional groups A and/or reactive functional groups B, the number of the groups being four or more in total in one molecule, and the monomer contains at least two reactive functional groups A and at least two reactive functional groups B.
Specific examples and the like of the reactive functional groups A and the reactive functional groups B are as described above.
Preferably, specific examples of the third monomer include one or more kinds selected from monomers (5) to (8) and monomers (15) to (18) expressed by the following chemical formulas.

(5)

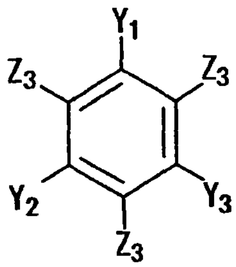

[wherein $Y_1$, $Y_2$, $Y_3$= $SO_2NZ_1Z_2$, $SO_2X$, $CONZ_1Z_2$, or COX, and $Y_1$=$Y_2$=$Y_3$]

(6) $P_1-CF_2-CFP_2-(CF_2)_A-CFP_3-CF_2-P_4$

(7) $P_1-(CF_2)_A-(CF_2CFP_2)_B-(CF_2)_C-P_3$

(8)

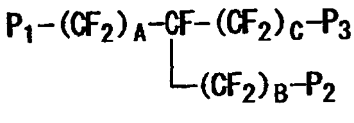

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(15)

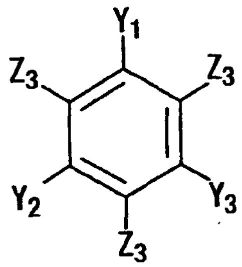

[wherein $Y_1$, $Y_2$, $Y_3$= $SO_2NZ_1Z_2$, $SO_2X$, $CONZ_1Z_2$, or COX, and combinations other than $Y_1=Y_2=Y_3$]

(16) $P_1-CF_2-CFP_2-(CF_2)_A-CFP_3-CF_2-P_4$

(17) $P_1-(CF_2)_A-(CF_2CFP_2)_B-(CF_2)_C-P_3$

(18)

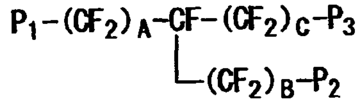

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]

[wherein X represents F, Cl, Br, I, or OH, $Z_1$ and $Z_2$ each represent H, M, or $SiMe_3$, M represents a metal ion, and $Z_3$ represents H or F.]

The method for manufacturing the composite electrolyte membrane of the present invention includes several variations.

While the manufacturing method of the present invention includes in its basic mode; the step of filling with the first monomer and the second monomer and the step of forming the imido-network polymer in the pores of the porous membrane, either of which is performed once, it is also preferable to repeat the step of filling with the first monomer and the second monomer and the step of forming the imido-network polymer in the pores of the porous membrane two or more times, from the viewpoint of formation of the imido-network polymer. Further, in addition to the step of filling with the first monomer and the second monomer and the step of forming the imido-network polymer in the pores of the porous membrane, it is also preferable to repeat the step of protonating the imido-network polymer two or more times.

Similarly, while the manufacturing method of the present invention includes in its basic mode: the step of filling with the third monomer; and the step of forming the imido-network polymer in the pores of the porous membrane, either of which is performed once, it is also preferable to repeat the step of filling with the third monomer and the step of forming the imido-network polymer in the pores of the porous membrane two or more times, from the viewpoint of formation of the imido-network polymer. Further, in addition to the step of filling with the third monomer and the step of forming the imido-network polymer in the pores of the porous membrane, it is also preferable to repeat the step of protonating the imido-network polymer two or more times.

Furthermore, the method for manufacturing the composite electrolyte membrane of the present invention also includes generating two or more kinds of polymer by changing a filler monomer each time when repeating the step of filling with the monomer and the step of forming the imido-network polymer in the pores of the porous membrane two or more times.

Also, the method for manufacturing the composite electrolyte membrane of the present invention also includes a step of cross-linking the molecules of two or more kinds of generated polymer.

In the method for manufacturing the composite electrolyte membrane of the present invention, two or more kinds of the polymer have any one of the physical properties (1) to (3) below.

(1) In cases in which the ion conductivity of two or more kinds of the polymer differs from each other.

(2) In cases in which the cubical expansion rate of two or more kinds of the polymer with respect to water differs from each other. Preferably, the cubical expansion rate of the polymer with respect to water is 10 to 400%, more

preferably it is 100 to 300%.

(3) In cases in which a polymer generated at the second time or thereafter has a lower degree of elasticity, a high degree of extensibility, and a higher viscosity than a polymer generated at the first time.

In the present invention, it is effective to use one or more kinds of method selected from a ultrasonic treatment, a deaeration treatment, a depressurization treatment, and an interface treatment (plasma treatment), in the step of filling with the monomer.

In the present invention, it is preferable that the crosslink density of the imido-network polymer in the composite electrolyte membrane is 0.1 mmol/g or greater. With a crosslink density of 0.1 mmol/g or greater, higher proton conductivity can be obtained.

Specific examples of the porous membrane used in the method for manufacturing the composite electrolyte membrane of the present invention are as described above.

In a third aspect, the present invention is a fuel-cell electrolyte membrane composed of the above composite electrolyte membrane.

In a fourth aspect, the present invention is a chemical-process membrane composed of the above composite electrolyte membrane.

In a fifth aspect, the present invention is a fuel cell in which the above composite electrolyte membrane is used. Namely, in a solid polymer fuel cell having a membrane-electrode assembly (MEA) composed of (a) a polymer solid electrolyte membrane and (b) a gas diffusion electrode that is bonded to the electrolyte membrane and that has, as its principal constituent materials, a conductive carrier supporting catalytic metal and electrode catalyst formed of a proton-conducting material, the above composite electrolyte membrane is characteristically used as the polymer solid electrolyte membrane.

Since the imido-network polymer, which has been conventionally difficult to be formed in the shape of a membrane, can be formed in the shape of a self-sustained electrolyte membrane, by using the composite membrane of the present invention in a fuel cell, it is possible to obtain a fuel cell having excellent mechanical strength, improved durability, excellent chemical stability, and excellent proton conductivity.

## EFFECT OF THE INVENTION

While the imido-network polymer has high proton conductivity, due to its rigid backbone structure and poor flexibility, it has been difficult for the imido-network polymer to maintain its sustainability by itself. In order to expand the range of use of the imido-network polymer, it is desirable to use it as a self-sustained membrane. In accordance with the present invention, by forming the imido-network polymer in pores of a porous reinforcing membrane and filling the pores of the porous reinforcing membrane with the imido-network polymer, a composite membrane having sustainability and flexibility can be obtained.

Thus, operation/working effects provided by the composite electrolyte membrane of the present invention are as follows:

(1) The imido-network polymer, which has been difficult to be formed in the shape of a membrane by itself, can be formed in the shape of a membrane having a membrane thickness as thin as, for example, several dozen μm or less.

(2) By forming the imido-network polymer cross-linked with strongly-acidic groups in the shape of a self-sustained membrane, it is possible to form an electrolyte membrane having high strength and high proton conductivity.

(3) By forming the imido-network polymer cross-linked with strongly-acidic groups in the shape of a self-sustained membrane, it is possible to form a chemical-process membrane having a separation function and a catalyst function.

(4) Condensation-polymerization-type electrolyte material, which has been difficult to be formed in the shape of a composite membrane, can be formed in the shape of a composite membrane.

(5) By using the imido-network polymer cross-linked with strongly-acidic groups, the pore surface of a porous material can be functionalized.

## BRIEF DESCRIPTION OF THE DRAWINGS

Fig. 1 shows I-V characteristic evaluation results for MEAs using composite membranes obtained in Example 25 and Comparative Example 3 and cell resistance in both Examples.

## BEST MODES FOR CARRYING OUT THE INVENTION

It is desirable that a porous membrane that is a main constituent of the composite electrolyte membrane of the present invention is a polymer porous membrane. Specifically, materials such as, polyimide (PI), polyetherketoneketone

(PEKK), polyether ether ketone (PEEK), polyetherimide (PEI), PAI, polyphenylene sulfide (PPS), PPSU, PAR, PBI, PA, polyphenylene ether (PPO), polycarbonate (PC), PP, polyether sulfone (PES), PVDC, PSF, PAN, polyethylene terephthalate (PET), polyethylene (PE), cross-linked polyethylene, high-density polyethylene (HDPE), polytetrafluoroethylene (PTFE), and PVDF, can be used.

Further, examples of the porous membrane include a porous body of resin, such as: methacrylate-based resin such as polymethyl methacrylate (PMMA); styrene-based resin, such as polystyrene, acrylonitrile-styrene copolymer (AS resin), or acrylonitrile-butadiene-styrene resin (ABS resin); polyacrylic esters, such as polyamide, polyamide imide, polyesterimide, polyacetal, polyalylate, polyaryl, polysulfone, polyurethanes, polyetherketonketons, polybutyl acrylates, or polyacrylic ethyl; polyvinyl esters such as polybutoxymethylene; polydienes such as polysiloxanes, polysulfides, polyphosphazenes, polytriazines, polycarboruns, polynorbornene, epoxy-based resin, polyvinyl alcohol, polyvinyl pyrrolidone, polyisoprene, or polybutadiene; polyalkenes such as polyisobutylene; fluorine-based resin such as polyvinylidene fluoride, hexafluoropropylene-based resin, hexafluoroacetone-based resin, or polytetrafluoroethylene resin; and polyolefin resin such as, polyethylene, polypropylene, or ethylene-propylene copolymer. However, the porous membrane is not limited to the above examples.

Preferable examples of an inorganic porous membrane include silica and alumina.

A technique for boring pores in the above polymer material is not particularly limited; various methods, such as a drawing method, a solution casting method, an etching method involving chemical processing, and a laser light irradiation method, can be used.

The porous membrane that is a main constituent of the composite electrolyte membrane of the present invention, especially when used in a fuel cell, will be hereafter described.

The pore diameter of the porous membrane is preferably 0.01 μm to 3 μm, more preferably 0.05 μm to 1 μm. If the pore diameter is small, impregnation with the monomer becomes difficult, and thus the filling rate at which the composite membrane is filled with the network polymer tends to be low. If the pore diameter is large, there is a tendency that an effect of reinforcing the mechanical strength of the composite membrane and an effect of suppressing change in dimension when in a hydroscopic state cannot be sufficiently obtained.

The porosity of the porous membrane is preferably 20% to 95%, more preferably 40% to 95%, and even more preferably 40% to 80%. If the porosity is small, the percentage of the electrolyte in the composite membrane becomes small, whereby sufficient conductivity cannot be obtained. If the porosity is large, the percentage of the carrier in the composite membrane becomes small, whereby the effect of reinforcing the mechanical strength of the composite membrane and the effect of suppressing change in dimension when in a hydroscopic state cannot be sufficiently obtained.

The membrane thickness of the porous membrane is preferably 5 μm to 500 μm, more preferably 10 μm to 200 μm, and even more preferably 15 μm to 100 μm. If the membrane thickness is too thin, the mechanical strength of the composite membrane becomes insufficient, whereby durability tends to decrease. If the membrane thickness is too thick, proton conductivity of the composite membrane in a membrane thickness direction becomes small, and thus power generation characteristics tend to decrease when used in a fuel cell.

In the following, the "imido-network polymer cross-linked with strongly-acidic groups" of which the electrolyte portion of the composite electrolyte membrane of the present invention is composed will be specifically described.

The "imido-network polymer cross-linked with strongly-acidic groups" used in the present invention refers to a solid polymer electrolyte having both high crosslink density and high electric conductivity.

The "imido-network polymer cross-linked with strongly-acidic groups" that is a polymer electrolyte according to a first example of the present invention is obtained by allowing one or more kinds of a first monomer and one or more kinds of a second monomer that satisfy predetermined conditions to react with each other.

In the present invention, the "first monomer" has a molecular weight of 10,000 or less, and n ($n \geqq 2$) reactive functional groups A and/or reactive functional groups B are contained in one molecule. Further, the "second monomer" has a molecular weight of 10,000 or less, and m ($m \geqq 3$, $m \neq n$) reactive functional groups A and/or reactive functional groups B are contained in one molecule. Furthermore, the "reactive functional groups A" and the "reactive functional groups B" refer to such functional groups capable of forming, by reacting with each other, a bissulfonimide group ($-SO_2NHSO_2-$), a sulfoncarbonimide group ($-SO_2NHCO-$), or a biscarboximide group (-CONHCO-) (all of which is hereafter collectively referred to as a "strongly acidic imido group.")

The molecular weight of the first monomer and the second monomer is not particularly limited, an optimum value is selected depending on characteristics, the intended use, and the like required for polymer electrolyte. Generally, if the molecular weight of the first monomer and/or the second monomer is small, a solid polymer electrolyte having high cross-link density and high electric conductivity can be obtained. On the other hand, if the molecular weight of the first monomer and/or the second monomer is large, a polymer electrolyte having high flexibility can be obtained. However, if the molecular weight of the first monomer and/or the second monomer is too large, it becomes difficult to achieve both high cross-link density and high electric conductivity at the same time. Thus, it is preferable to use the first monomer and the second monomer each having a molecular weight of 10,000 or less.

For example, when the composite electrolyte membrane according to the present invention is used as an

electrolyte membrane in a solid polymer fuel cell, it is preferable that the molecular weight of each of the first monomer and the second monomer is 130 or more and 10,000 or less, more preferably 130 or more and 7,000 or less.

The reactive functional groups A and B contained in the first monomer and the second monomer may be any groups that are capable of forming strongly-acidic imido groups, as a result of the reaction between the groups performed directly or after an appropriate functional group transformation.

There are various combinations of such reactive functional groups A and B. Among them, such combination of the reactive functional groups A each composed of $-SO_2X$ or -COX (wherein X represents F, Cl, Br, I, or OH) (which are hereafter referred to as "halide-based functional groups") and the reactive functional groups B each composed of $-SO_2NZ_1Z_2$ or $-CONZ_1Z_2$ (wherein $Z_1$ and $Z_2$ each represent H, M, or $SiMe_3$, and M represents a metal ion) (which are hereafter referred to as "imide-based functional groups"). Alternatively, such combination may be reversed. Further, the metal ion M is preferably a monovalent metal ion, such as Li, K, Na or the like.

Since it is often the case that the combination of the halide-based functional groups and the imide-based functional groups can be easily allowed to directly react with each other without application of the functional group transformation, such combination is thus particularly preferable as a combination of the reactive functional group A and the reactive functional group B. Further, since these functional groups can be converted to sulfonic acid groups or carboxylic acid groups by subjecting them to an appropriate treatment, even when they remain unreacted, a solid polymer electrolyte having high electric conductivity can be obtained.

Further, among the halide-based functional groups, since such groups having X composed of F, Cl, Br, or I have high reactivity, they are preferable as the reactive functional groups A or B. Furthermore, among the imide-based function groups, such groups having a combination of ($Z_1$ and $Z_2$) composed of (H and H), (H and M), ($SiMe_3$ and M), or (H and $SiMe_3$) have high reactivity, they are preferable as the reactive functional groups A or B.

The total number n of the reactive functional groups A and B contained in the first monomer in one molecule needs to be 2 or more. On the other hand, the total number m of the reactive functional groups A and B contained in the second monomer in one molecule needs to be 3 or more, and the total number m ($m \neq n$) needs to differ from the total number n of the functional groups in the first monomer.

The first monomer may contain only either the reactive functional groups A or the reactive functional groups B. Alternatively, the first monomer may contain both of the above reactive functional groups A and B. In cases in which two or more reactive functional groups A (or reactive functional groups B) are contained in the first monomer, these reactive functional groups A (reactive functional groups B) may be functional groups of the same type (for example, $-SO_2X$ alone) or functional groups of a different type (for example, a combination of $-SO_2X$ and -COX). This also applies to the second monomer.

There are various monomers as such first monomer and second monomer. Particularly, monomers (1) to (8) and monomers (9) to (18) expressed by the following formulas are suitable as the first monomer.

(1) $Z_1Z_2NO_2S(CF_2)_mSO_2NZ_1Z_2$ (2) $Z_1Z_2NOC(CF_2)_mCONZ_1Z_2$

(3) $XO_2S(CF_2)_mSO_2X$ (4) $XOC(CF_2)_mCOX$

[wherein m=1 to 20]

(5)

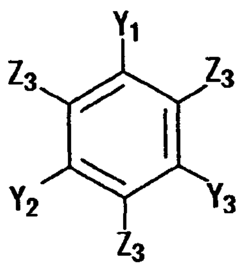

[wherein $Y_1$, $Y_2$, $Y_3$= $SO_2NZ_1Z_2$, $SO_2X$, $CONZ_1Z_2$, or COX, and $Y_1=Y_2=Y_3$]

(6) $P_1-CF_2-CFP_2-(CF_2)_A-CFP_3-CF_2-P_4$

(7) $P_1-(CF_2)_A-(CF_2CFP_2)_B-(CF_2)_C-P_3$

(8) 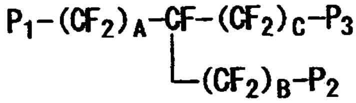

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(9) $Z_1Z_2NO_2S(CF_2)_mSO_2X$ (10) $Z_1Z_2NOC(CF_2)_mSO_2X$

(11) $XO_2S(CF_2)_mCOX$ (12) $XOC(CF_2)_mSO_2NZ_1Z_2$

(13) $Z_1Z_2NO_2S(CF_2)_mCONZ_1Z_2$ (14) $Z_1Z_2NOC(CF_2)_mCOX$

[wherein m=1 to 20]

(15) 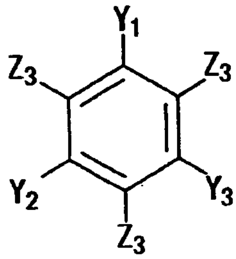

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1$-$CF_2$-$CFP_2$-$(CF_2)_A$-$CFP_3$-$CF_2$-$P_4$

(17) $P_1$-$(CF_2)_A$-$(CF_2$-$CFP_2)_B$-$(CF_2)_C$-$P_3$

(18) 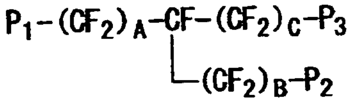

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

Further, monomers (5) to (8) and monomers (15) to (18) expressed by the following formulas are suitable as the second monomer. Among these monomers, since those that do not contain C-H bonds in their molecules have polymer chains in the form of a perfluoro backbone, a solid polymer electrolyte excellent in heat resistance and oxidation resistance can be obtained. Thus, such monomers are particularly suitable.

(5) 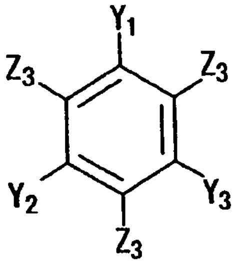

[wherein $Y_1$, $Y_2$, $Y_3$= $SO_2NZ_1Z_2$, $SO_2X$, $CONZ_1Z_2$, or COX, and $Y_1$=$Y_2$=$Y_3$]

(6) $P_1$-$CF_2$-$CFP_2$-$(CF_2)_A$-$CP_3$-$CF_2$-$P_4$

(7) $P_1$-$(CF_2)_A$-$(CF_2CFP_2)_B$-$(CF_2)_C$-$P_3$

(8) 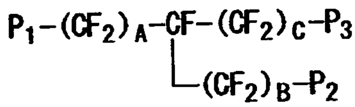

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]

[wherein X represents F, Cl, Br, I, or OH, $Z_1$ and $Z_2$ each represent H, M, or $SiMe_3$, M represents a metal ion, and $Z_3$ represents H or F.]

(15) 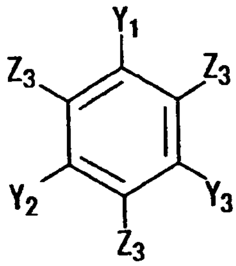

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1$-$CF_2$-$CFP_2$-$(CF_2)_A$-$CFP_3$-$CF_2$-$P_4$

(17) $P_1$-$(CF_2)_A$-$(CF_2CFP_2)_B$-$(CF_2)_C$-$P_3$

(18) 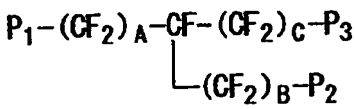

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations

other than $P_1= P_2= P_3=P_4$]

[wherein X represents F, Cl, Br, I, or OH, $Z_1$ and $Z_2$ each represent H, M, or $SiMe_3$, M represents a metal ion, and $Z_3$ represents H or F.]

Note that, in the above formulas, "combinations other than $Y_1=Y_2=Y_3$" refer to cases such as $Y_1=Y_2\neq Y_3$, $Y_1=Y_3\neq Y2$, $Y_1\neq Y_2=Y_3$, and $Y_1\neq Y_2\neq Y_3$. Further, "combinations other than $P_1=P_2=P_3=P_4$" refer to cases such as $P_1=P_2=P_3\neq P_4$, $P_1=P_2=P_4\neq P3$, $P_1=P_3=P_4\neq P_2$, $P_1\neq P_2=P_3=P_4$, $P_1=P_2\neq P_3\neq P_4$, $P_1=P_3\neq P_2\neq P4$, $P_1=P_4\neq P_2\neq P3$, $P_1\neq P_2\neq P_3=P_4$, and $P_1\neq P_2\neq P_3\neq P_4$. In the monomer (17) expressed by the above formula, when B in the repeating unit "$-(CF_2CFP_2)_B-$" of the central part is 2 or more, individual functional groups $P_2$ may be functional groups identical to each other, or they may be combinations of functional groups different from each other.

Other preferred examples of the first monomer and the second monomer include Nafion monomers, oligomers having a molecular weight of 10,000 or less formed by polymerization of the monomers (A) to (F) expressed by the following formulas, and derivatives of the above.

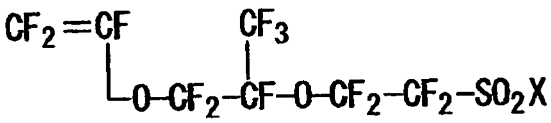

··· (A)

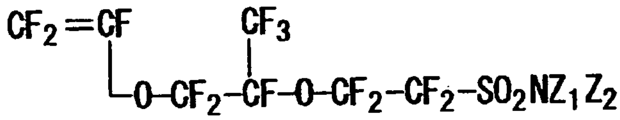

··· (B)

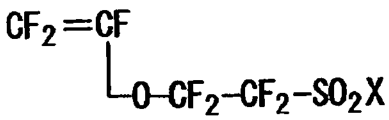

··· (C)

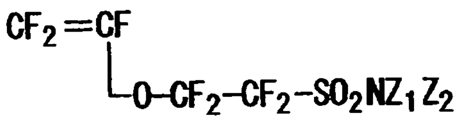

··· (D)

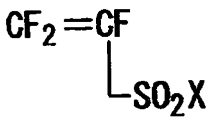

··· (E)

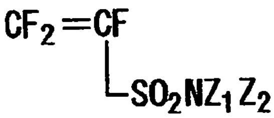

··· (F)

[wherein X represents F, Cl, Br, I, or OH, $Z_1$ and $Z_2$ each represent H, M, or $SiMe_3$, and M represents a metal ion]

When synthesizing the "imido-network polymer cross-linked with strongly-acidic groups" by using one or more kinds of the first monomer and one or more kinds of the second monomer, at least one reactive functional group A and at least one reactive functional group B need to be contained in either one or more kinds of the first monomer and one or more kinds of the second monomer. Further, in order to introduce chemical cross-linking into a solid polymer electrolyte, it is preferable that at least two reactive functional groups A and at least two reactive functional groups B are contained in either one or more kinds of the first monomer and one or more kinds of the second monomer.

For example, when difunctional monomers each having two imide-based functional groups (A) (for example, the monomer (1) or (2) expressed by the above formula, which is hereafter abbreviated to be "AA") are used as the first monomers, and trifunctional monomers each having two imide-based function groups (A) and one halide-based functional group (B) (for example, the monomer (15) expressed by the above formula, which is hereafter abbreviated to be "AAB") are used as the second monomers, and by allowing them to react with each other, two of the trifunctional monomers AAB bind to both ends of one of the difunctional monomers AA, whereby an oligomer having a structure "AAB-AA-BAA" is obtained. In this case, two strongly-acidic imido groups ("B-A" and "A-B") in total are formed at the binding points between the difunctional monomer AA and the trifunctional monomers AAB.

Upon further continuation of the reaction, the halide-based functional group (B) of another trifunctional monomer AAB binds to the imide-based functional group (A) at an end of the oligomer, and a new strongly-acidic imido group (A-B) is formed at the binding point. Subsequently, by sequentially repeating such reaction, it is possible to form a so-called "dendrimer" in which polymer chains are radially grown with the difunctional monomer AA as the center.

Further, for example, when difunctional monomers each having one imide-based functional group (A) and one halide-based functional group (B) (for example, the monomer (9), (10), (12), or (14) expressed by the above formula, which is hereafter abbreviated to be "AB") are used as the first monomers, and trifunctional monomers each having three halide-based functional groups (B) (for example, the monomer (5) expressed by the above formula, which is hereafter abbreviated to be "BBB.") are used as the second monomers, by allowing them to react with each other, an oligomer having a structure "BA-BB(AB)B-AB" can be obtained.

Upon further continuation of the reaction, the imide-based functional group (A) of another difunctional monomer AB binds to the halide-based functional group (B) at an end of the oligomer, whereby a new strongly-acidic imido group (A-B) is formed at the binding point. Subsequently, by sequentially repeating such reaction, it is possible to form a so-called "dendrimer" in which polymer chains are radially grown with the trifunctional monomer BBB as the center.

Further, for example, when difunctional monomers AA each having two imide-based functional groups (A) are used as the first monomers and trifunctional monomers BBB each having three halide-based functional groups (B) are used as the second monomers, by allowing them to react with each other, an oligomer having a structure "AA-BB(AA) B-AA" can be obtained.

Upon further continuation of the reaction, another trifunctional monomer BBB and another difunctional monomer AA, in this sequence, bind to the imide-based functional group (A) at an end of the oligomer, and a new strongly-acidic imido group (A-B) is formed at the binding point. Subsequently, by sequentially repeating such reaction, an "imido-network polymer cross-linked with strongly-acidic groups" in which grown polymer chains are mutually cross-linked via the difunctional monomers AA can be obtained.

Further, for example, when difunctional monomers AA each having two imide-based functional groups (A) are used as the first monomers, and trifunctional monomers BAB each having one imide-based functional group (A) and two halide-based functional groups (B) (for example, the monomer (15) expressed by the above formula) are used as the second monomers, by allowing them to react with each other, an oligomer having a structure "AA-BAB-AA" can be obtained.

Upon further continuation of the reaction, the halide-based functional group (B) of another trifunctional monomer BAB binds to the imide-based functional group (A) at an end or the center of the oligomer, and a new strongly-acidic imido group (A-B) is formed at the binding point. Further, the new imide-based functional group (A) of another trifunctional monomer BAB or another difunctional monomer AA binds to a remaining halide-based functional group (B) at an end of the oligomer, and a new strongly-acidic imido group (A-B) is formed at the binding point. Subsequently, by sequentially repeating such reaction, the "imido-network polymer cross-linked with strongly-acidic groups" in which grown polymer chains are mutually cross-linked via the difunctional monomers AA can be obtained.

Further, for example, when difunctional monomers AB each having one imide-based functional group (A) and one halide-based functional group (B) are used as the first monomers and trifunctional monomers BAB each having one imide-based functional group (A) and two halide-based functional groups (B) are used as the second monomer, by allowing them to react with each other, an oligomer having a structure "BA-BAB-AB" is obtained.

Upon further continuation of the reaction, the imide-based functional group (A) of another difunctional monomer AB or another trifunctional monomer BAB binds to the halide-based functional group (B) at an end of the oligomer, and a new strongly-acidic imido group (A-B) is formed at the binding point. Further, the halide-based functional group (B) of another difunctional monomer AB or another trifunctional monomer BAB binds to the imide-based functional group (A) at an end of the oligomer, and a new strongly-acidic imido group (A-B) is formed at the binding point. Subsequently, by

sequentially repeating such reaction, the "imido-network polymer cross-linked with strongly-acidic groups" in which grown polymer chains are mutually cross-linked via the difunctional monomers AB can be obtained.

Further, for example, when difunctional monomers AB each having one imide-based functional group (A) and one halide-based functional group (B) and are used as the first monomers, and trifunctional monomers AAA each having three imide-based functional groups (A) (for example, the monomer (5) expressed by chemical formula 5) and trifunctional monomers BBB each having three halide-based functional groups are used as the second monomers, by allowing them to react with each other, first, one of the trifunctional monomer AAA and one of the difunctional monomers AB react with each other, whereby an oligomer having a structure "AB-AA(BA)A-BA" can be obtained.

Upon further continuation of the reaction, first, another trifunctional monomer BBB or another difunctional monomer BA binds to the imide-based functional group (A) at an end of the oligomer, and a new strongly-acidic imido group (A-B) is formed. Next, another trifunctional monomer AAA or another difunctional monomer AB binds to the halide-based functional group (B) at an end of the oligomer, while another trifunctional monomer BBB or another difunctional monomer BA binds to the imide-based functional group (A) at another end of the oligomer. A new strongly-acidic imido group (A-B) is formed at each binding point. Subsequently, by sequentially repeating such reaction, the "imido-network polymer cross-linked with strongly-acidic groups" in which grown polymer chains are mutually cross-linked can be obtained.

Further, for example, when difunctional monomers AA each having two imide-based functional groups (A) and difunctional monomers BB each having two halide-based functional groups (B) are used as the first monomers, and trifunctional monomers BBB each having three halide-based functional groups (B) are used as the second monomers, by allowing them to react with each other, first, one of the trifunctional monomer BBB and one of the difunctional monomer AA react with each other, whereby an oligomer having a structure "AA-BB(AA)B-AA" can be obtained.

Upon further continuation of the reaction, first, another trifunctional monomer BBB or another difunctional monomer BB binds to the imide-based functional group (A) at an end of the oligomer, and a new strongly-acidic imido group (A-B) is formed at the binding point. Next, another difunctional monomer AA binds to the halide- based functional group (B) at an end of the oligomer, and a new strongly-acidic imido group (A-B) is formed at the binding point. Subsequently, by sequentially repeating such reaction, the "imido-network polymer cross-linked with strongly-acidic groups" in which grown polymer chains are mutually cross-linked can be obtained.

Synthesis using a monomer having four or more reactive functional groups is carried out in the same manner, and when any of a plurality of various types of monomers contains at least one reactive functional group A and at least one reactive functional group B, a dendrimer" in which polymer chains are radially grown can be obtained. Further, when any of a plurality of various types of monomers contains at least two reactive functional groups A and at least two reactive functional groups B, the "imido-network polymer cross-linked with strongly-acidic groups" in which polymer chains are mutually cross-linked can be obtained.

An optimum compounding ratio of one or more kinds of the first monomer to one or more kinds of the second monomer is selected depending on demand characteristics or the like of the "imido-network polymer cross-linked with strongly-acidic groups" synthesized. For example, when synthesizing the dendrimer, it is preferable to increase the ratio of monomers of which polymer chains are composed with respect to monomers that will be the core of the dendrimer.

Generally, if the ratio of the monomers of which polymer chains are composed is increased, a larger molecular weight of the dendrimer can be achieved. Note that if the ratio of the monomers of which polymer chains are composed becomes too high, an electrolyte having a high molecular weight cannot be obtained (molecular weight will not be increased), which is not preferable. Specifically, it is preferable that the ratio of the monomers of which polymer chains are composed is 10 mol or more and 700 mol or less, more preferably 30 mol or more and 300 mol or less, with respect to one mol of the monomers that will be the core of the dendrimer. By allowing such dendrimer having the reactive functional group A at an end thereof and such dendrimer having the reactive functional group B at an end thereof to react with each other, the "imido-network polymer cross-linked with strongly-acidic groups" can be obtained.

In contrast, when synthesizing the "imido-network polymer cross-linked with strongly-acidic groups," the first and second monomers are mixed such that the number of moles of the reactive functional groups A and the number of moles of the reactive functional groups B contained in the first and second monomers are the same. In this way, ideally, strongly-acidic imido groups can be generated from all the reactive functional groups A and reactive functional groups B.

However, the number of moles of the reactive functional groups A and the number of moles of the reactive functional groups B contained in the first and second monomers do not need to be completely the same; any one of the numbers may be larger or smaller. This is because, even when any one of the numbers is larger or smaller than the other, it can be conceivable that unreacted reactive functional groups A or reactive functional groups B remain without change in polymer chains or that linear or branched polymer chains radially grow around polymers cross-linked in the form of a network.

However, if the ratio of the reactive functional groups A to the reactive functional groups B significantly deviates from a theoretical value, unreacted monomers or low molecular weight oligomers remain in the solid polymer electrolyte. This is not preferable, since there is a possibility that these monomers or oligomers may be eluted during use. Thus,

when the "imido-network polymer cross-linked with strongly-acidic groups" is synthesized, it is preferable to comply with a so-called gelation theory.

Assuming that the probability that a branching unit binds to the next branching monomer via a difunctional monomer is $\alpha$, the probability that a chain extending from a branch is not further extending from the next branch is (1-$\alpha$). Thus, if the branching point is a trifunctional monomer, the probability is $\alpha>1/2$, and if the branching point is an f functional monomer, molecules with the probability $\alpha>1/(f-1)$ extend to infinity. Assuming that the probability $\alpha$ at the gelation point where the infinite network begins to be formed is $\alpha_0$, the following equation can be established:

$$\alpha_0=1/(f-1)$$

Now, it is assumed that one monomer is a mixture of f functional and difunctional monomers, and the other is a difunctional monomer alone. For example, while a chain of which both ends are branched out as follows can be obtained through a reaction between AAA, AA, and BB, in the case of f=3, the relationship between its generation probability and monomer reaction rate will be hereafter considered.

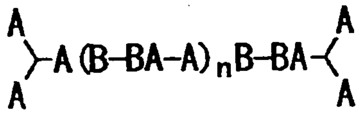

It is assumed that the fraction of the f functional monomer to A with initial concentration $[A]_0$ is p. When the reaction rate of the functional groups A and B becomes $p_A$ and $p_B$, respectively, the probability that the above chain of which both ends bind to the f functional monomers is as follows:

$$p_A\{p_B(1-\rho)p_A\}^n p_B\rho(n=0\sim\infty)$$

Therefore, the probability that both ends of an arbitrary chain connected to a branching point irrespective of n; that is, $\alpha$, is as follows:

$$\alpha=\sum_{n=0}^{\infty}p_Ap_B\{p_Ap_B(1-\rho)\}^n\rho=\frac{p_Ap_B\rho}{1-p_Ap_B(1-\rho)}$$

Assuming that the concentration ratio of an initial functional group A to an initial functional group B in a reaction network is $\gamma$, since an equation $p_B=\gamma p_A$ is established, by inserting the equation in the above equation, the following equation can be derived:

$$\alpha=\gamma p_A^2\rho/\{1-\gamma p_A^2(1-\rho)\}=p_B^2\rho/\{\gamma-p_B^2(1-\rho)\}$$

Thus, because $\alpha$ can be determined by actually measuring $p_A$ and $p_B$, and $\alpha_0=1/(f-1)$ is established at the gelation point, if $\gamma$ and p are known in advance, it is possible to predict pA or pB at the gelation point (see Kobunshi Kagaku no Kiso, p.250 to 251, Tokyo Kagaku Dojin (1978), edited by the society of polymer science, Japan).

For example, in the case of a combination of a trifunctional monomer AAA and a difunctional monomer BB, assuming that the reaction rate is 1, it is preferable to mix the first and second monomers such that the ratio of the reactive functional groups B with respect to the reactive functional groups A per mol is 0.5 mol or more and 2 mol or less. More preferably, the ratio of the reactive functional groups B with respect to the reactive functional groups A per mol is 0.8 mol or more and 1.2 mol or less.

Further, in the case of a tetrafunctional monomer AAAA and a difunctional monomer BB, assuming that the reaction rate is 1, it is preferable to mix the first and second monomers such that the ratio of the reactive functional groups B to the reactive functional groups A per mol is 0.3 mol or more and 3 mol or less. More preferably, the ratio of the reactive functional groups B to the reactive functional groups A per mol is 0.6 mol or more and 1.5 mol or less.

Further, when the "imido-network polymer cross-linked with strongly-acidic groups" according to the present example and a porous membrane are combined, it is preferable to use polytetrafluoroethylene, polyimide, polyethylene, polyethylene tetrafluoroethylene, PFA (tetrafluoroethylene perfluorovinylether copolymer), FEP (tetrafluoroethylene propylene hexafluoride copolymer), porous silica, porous ceramics, and the like for the porous membrane. In this case, an optimum porosity, average pore size, thickness, and the like of the porous membrane are selected depending on the intended use, demand characteristics, and the like of the composite electrolyte membrane. Further, the "imido-network polymer cross-linked with strongly-acidic groups" may be uniformly dispersed in the porous membrane or unevenly distributed on the surface or in the porous membrane.

Further, a cross-linked structure is introduced to the inside of the "imido-network polymer cross-linked with strongly-acidic groups" according to the present example, depending on synthesis conditions such as the type, the compounding ratio, and the like of the first and second monomer that are used for synthesis. The "cross-link" as used in the present invention refers to both "physical cross-link" formed by polymer chains physically interwinding with each other and "chemical cross-link" in which polymer chains are molecularly cross-linked via the first monomers or the second monomers.

The crosslink density can be adjusted by optimizing synthesis conditions. Generally, if the crosslink density is high, swelling/shrinking with respect to water is small, and therefore a solid polymer electrolyte excellent in heat resistance and durability can be obtained. Specifically, it is preferable that the crosslink density is 0.1 mmol/g or more, and more preferably, it is 0.5 mmol/g or more.

Further, since crosslinking points of the "imido-network polymer cross-linked with strongly-acidic groups" according to the present example function as strongly-acidic groups, in association with an increase in crosslink density, electric conductivity is also increased. Namely, it is possible to achieve both high crosslink density and high electric conductivity at the same time, which has been difficult in accordance with conventional methods. The electric conductivity can be adjusted by optimizing synthesis conditions. In order to obtain an electrochemical device having high performance, specifically, it is preferable that the electric conductivity of the solid polymer electrolyte is 0.01 S/cm or more, and more preferably, it is 0.05 S/cm or more.

Next, a method for manufacturing the "imido-network polymer cross-linked with strongly-acidic groups" according to the present example will be described.

First, a method for filling a porous membrane with the imido-network electrolyte will be described.

Solvent used in the method may be any solvent as long as additives used for reaction, such as monomers or bases, can dissolve therein. For synthesizing the imido-network polymer, while an amide-type solvent, such as highly-polar acetonitrile, dimethylacetamide, or dimethylformamide, and an ether-type solvent, such as diethyl ether or tetrahydrofuran, are suitable, a halogen-type solvent such as chloroform or dichloromethane, a hydrocarbon-type solvent such as hexane, or the like may be used. When the ether-type solvent such as tetrahydrofuran is used, polymer solid portions and the solvent may be separated during gelation, as described in the example. However, since there are cases in which such separation is effective for highly filling a porous membrane with polymer, a solvent having such characteristics may be used.

With regard to concentration of the solvent used, the rate of filling of a porous membrane tends to be high if the monomer concentration is high. When the monomer is in the form of a liquid and can impregnate a porous material by itself, solvent is not required. For synthesizing the imido-network polymer, the quantity of solid portions after polymerization is preferably 10% to 90% by weight, and more preferably, it is 30% to 80% by weight.

In the present invention, it is preferable that a deaeration process is provided for improving the rate of filling. It is desirable that the porous membrane is immersed in solvent in advance, so as to remove air bubbles from the porous membrane. Examples of the method include a method by which deaeration is facilitated by reducing the pressure of a reaction container and a method by which ultrasonic irradiation is combined.

The rate of filling can be improved in a process of condensed filling by which solvent alone is distilled away in the process of polymerization and the concentration of solid portions is increased. It is preferable that the timing of distilling away the solvent is right before the gelation point. If the distillation of the solvent is carried out too early, there is a possibility that part of the monomers is also distilled away, thereby decreasing the crosslink density of the network polymer. If the distillation of the solvent is carried out too late, the viscosity becomes that of the polymer component rather than that of gelation, thereby losing fluidity. Thus, in such case, the polymer may not be able to enter the porous material effectively.

The "imido-network polymer cross-linked with strongly-acidic groups" according to the present example can be synthesized by preparing a compound liquid containing one or more kinds of the first monomers and one or more kinds of the second monomers, and allowing the first monomer and the second monomer to react with each other.

In this case, the first monomer and the second monomer may be allowed to react with each other without change. Alternatively, they may be allowed to react with each other after carrying out an appropriate functional group transformation. Further, it is preferable that the first monomer and the second monomer are dissolved in a solvent that can dissolve them. An optimum solvent is simply selected depending on the type of the first monomer and the second monomer and thus the solvent is not particularly limited. Further, the concentration of the first monomer and the second monomer contained in the solvent is not particularly limited, either. Thus, the concentration thereof is simply selected depending on the type of the first monomer and the second monomer.

Further, when the first and second monomers are allowed to react with each other, a reagent for increasing the rate of reaction between the reactive functional groups A and the reactive functional groups B (that is, a reagent having a catalytic action) may be added thereto. Specifically, preferable examples of such reagent include basic compounds such as triethylamine, trimethylamine, tripropylamine, tributylamine, and DBU (diazabicycloundecen). A preferable amount of such reagent having a catalyst action is selected depending on the intended purpose, demand characteristics, and the like of the solid polymer electrolyte. By optimizing the amount of such reagent, it becomes possible to adjust the viscosity of compound liquid.

Next, a porous membrane is disposed on the bottom of a shallow container and a small amount of the compound liquid is poured from above, so as to impregnate the porous membrane with the compound liquid prepared in this way. Further, when the compound liquid contains the reagent having a catalytic action, there are cases in which reaction has already proceeded in the compound liquid to some extent, and the viscosity of the compound liquid has already increased. When the composite electrolyte membrane is manufactured with such compound liquid, the compound liquid can be pressed into the porous membrane by adding pressure after a small amount of the compound liquid is poured from above the porous membrane. At this point, by adjusting the viscosity and/or the pressure of the compound liquid, it becomes possible to uniformly or partially fill the inside of the porous membrane with the compound liquid.

It is also preferable to conduct an ultrasonic treatment or a defoaming treatment in this process.

It is preferable that the first monomer and the second monomer are allowed to react with each other under an inert atmosphere such as Ar or $N_2$, so as to prevent deterioration, such as hydrolysis of the first monomer and second monomer. Further, the reaction temperature, the reaction time, and the pressure during reaction are not particularly limited, optimum values thereof are selected depending on the type of the first and second monomers, the concentration of the compound liquid, the type and amount of the reagent having a catalytic action, and the like.

Upon completion of the reaction, the obtained polymer is retrieved from the container, and reactive functional groups A and reactive functional groups B that are at crosslinking points and that are unreacted are transformed into acidic groups (protonation). Various types of methods may be used as the method of transformation into acidic groups, and therefore, the method is not particularly limited. Specifically, preferable examples of such method include a method of protonation by which synthesized polymer is treated with acid such as nitric acid and a method of protonation by which synthesized polymer is saponified with alkaline solution and treated with acid.

Next, the "imido-network polymer cross-linked with strongly-acidic groups" that is a polymer electrolyte according to a second example of the present invention can be obtained by reacting one or more kinds of third monomer that satisfy predetermined conditions.

In the present example, the "third monomer" has a molecular weight of 10,000 or less, and p ($p \geqq 3$) reactive functional groups A and/or reactive functional groups B are contained in one molecule. Namely, the present example is characterized in that one or more kinds of the third monomer having the same number of functional groups per molecule is used as starting material.

Since the molecular weight of the third monomer, the types and the combinations of the reactive functional groups A and reactive functional groups B contained in the third monomer are the same as those of the above-described first monomer and the second monomer, the descriptions thereof are omitted.

The total number of the reactive functional groups A and reactive functional groups B contained in the third monomer per molecule is p ($p \geqq 3$). Further, the third monomer may contain either the reactive functional groups A or the reactive functional groups B, or they may contain both. Further, when the third monomer contains two or more reactive functional groups A (or reactive functional groups B), these reactive functional groups A (or reactive functional groups B) may be functional groups of the same type (for example, $-SO_2X$ alone) or functional groups of a different type (for example, a combination of $-SO_2X$ and -COX).

Examples of such third monomer include various types of monomers. Particularly, the monomers (5) to (8) and monomers (15) to (18) expressed by the following formulas are suitable as the third monomers. Further, among these monomers, since those that do not contain C-H bonds in their molecules have polymer chains in the form of a perfluoro backbone, a solid polymer electrolyte excellent in heat resistance and oxidation resistance can be obtained. Thus, such monomers are particularly suitable.

(5)

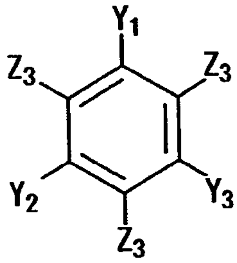

[wherein $Y_1$, $Y_2$, $Y_3$= $SO_2NZ_1Z_2$, $SO_2X$, $CONZ_1Z_2$, or COX, and $Y_1=Y_2=Y_3$]

(6) $P_1$-$CF_2$-$CFP_2$-$(CF_2)_A$-$CFP_3$-$CF_2$-$P_4$

(7) $P_1$-$(CF_2)_A$-$(CF_2CFP_2)_B$-$(CF_2)_C$-$P_3$

(8)

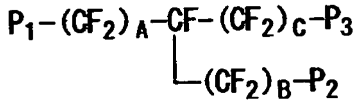

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(15)

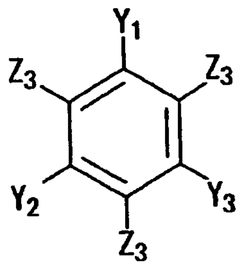

[wherein $Y_1$, $Y_2$, $Y_3$= $SO_2NZ_1Z_2$, $SO_2X$, $CONZ_1Z_2$, or COX, and combinations other than $Y_1=Y_2=Y_3$]

(16) $P_1$-$CF_2$-$CFP_2$-$(CF_2)_A$-$CFP_3$-$CF_2$-$P_4$

(17) $P_1$-$(CF_2)_A$-$(CF_2CFP_2)_B$-$(CF_2)_C$-$P_3$

(18)

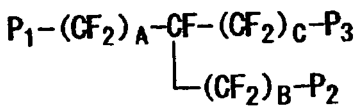

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations

other than $P_1= P_2= P_3=P_4$]
[wherein X represents F, Cl, Br, I, or OH, $Z_1$ and $Z_2$ each represent H, M, or $SiMe_3$, M represents a metal ion, and $Z_3$ represents H or F.]

Other preferred examples of the third monomer include Nafion monomers, oligomers having a molecular weight of 10,000 or less formed by polymerization of the monomers (A) to (F) expressed by the following formulas, and derivatives of the above.

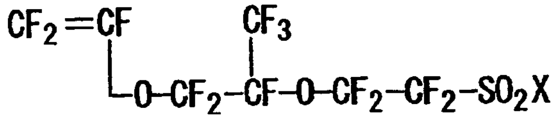
··· (A)

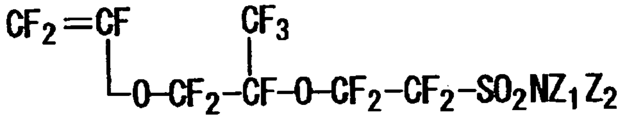
··· (B)

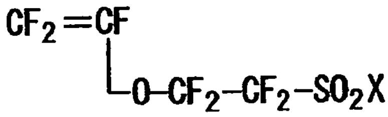
··· (C)

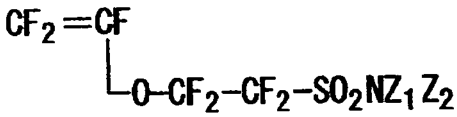
··· (D)

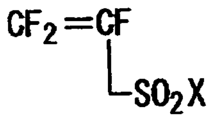
··· (E)

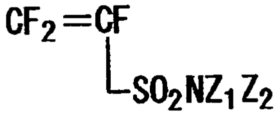
··· (F)

[wherein X represents F, Cl, Br, I, or OH, $Z_1$ and $Z_2$ each represent H, M, or $SiMe_3$, and M represents a metal ion]

When synthesizing the "imido-network polymer cross-linked with strongly-acidic groups" by using one or more kinds of the third monomer, at least one reactive functional group A and at least one reactive functional group B need to be contained in one or more kinds of the third monomer.

Further, in order to introduce chemical cross-linking into the "imido-network polymer cross-linked with strongly-acidic groups," when a monomer containing three reactive functional groups per molecule is used as the third monomer, it is preferable to use two or more kinds of the third monomer containing at least two reactive functional groups A and

at least two reactive functional groups B. Furthermore, when a monomer containing four or more reactive functional groups in one molecule is used as the third monomer, it is preferable to use one or more kinds of third monomer containing at least two reactive functional groups A and at least two reactive functional groups B.

For example, when trifunctional monomers AAB each having two imide-based functional groups (A) and one halide-based functional group (B) are used as the third monomers, by allowing them to react with each other, the halide-based functional group (B) of one of the trifunctional monomers AAB binds to the imide-based functional group (A) of another trifunctional monomer AAB, whereby an oligomer having a structure "AAB-AAB" can be obtained. Further, one strongly-acidic imido group (B-A) is formed at the binding point.

Upon further continuation of the reaction, the halide-based functional group (B) of another trifunctional monomer AAB binds to the imide-based functional group (A) at an end of the oligomer, and the imide-based functional group (A) of another trifunctional monomer AAB binds to the halide-based functional group (B) at the other end of the oligomer. Thus, another strongly-acidic imido group (A-B) is formed at each binding point. Subsequently, by sequentially repeating such reaction, a so-called "dendrimer" in which polymer chains are radially grown with the initially formed oligomer as the center can be formed.

Further, for example, when trifunctional monomers AAA each having three imide-based functional groups (A), and trifunctional monomers BBB each having three halide-based functional groups (B) are used as the third monomers, by allowing them to react with each other, an oligomer having a structure "AAA-BB(AAA)B-AAA" can be obtained.

Upon further continuation of the reaction, one of the trifunctional monomers BBB binds to the imide-based functional groups (A) at one end of the oligomer, and another strongly-acidic imido group (A-B) is formed at the binding point. Subsequently, by sequentially repeating such reaction, the "imido-network polymer cross-linked with strongly-acidic groups" in which grown polymer chains are mutually cross-linked can be obtained.

Further, for example, when tetrafunctional monomers AAAB each having three imide-based functional groups (A) and one halide-based functional group (B) are used as the third monomers, by allowing them to react with each other, the imide-based functional group (A) of one trifunctional monomer AAAB binds to the halide-based functional group (B) of another tetrafunctional monomer AAAB, whereby an oligomer having a structure "AAAB-AAAB" can be obtained. Further, one imido group (B-A) is formed at the binding point.

Upon further continuation of the reaction, the halide-based functional group (B) of another tetrafunctional monomer AAAB binds to the imide-based functional group (A) at one end of the oligomer, and the imide-based functional group (A) of another tetrafunctional monomer AAAB binds to the halide-based functional group (B) at one end of the oligomer, whereby another strongly-acidic imido group (A-B) is formed. Subsequently, by sequentially repeating such reaction, a so-called "dendrimer" in which polymer chains are radially grown with the initially formed oligomer as the center can be formed.

Further, for example, when tetrafunctional monomers AABB each having two imide-based functional groups (A) and two halide-based functional groups (B), are used as the third monomers, by allowing them to react with each other, an oligomer having a structure "AABB-AABB" can be obtained.

Upon further continuation of reaction, the halide-based functional group (B) of another tetrafunctional monomer AABB binds to the imide-based functional group (A) at one end of the oligomer, and the imide-based functional group (A) of another tetrafunctional monomer AABB binds to the halide-based functional group (B) at one end of the oligomer, whereby another strongly-acidic imido group (A-B) is formed at each binding point. Subsequently, by sequentially repeating such reaction, the "imido-network polymer cross-linked with strongly-acidic groups" in which grown polymer chains are mutually cross-linked can be obtained.

Synthesis using monomers, each having five or more reactive functional groups, is conducted in the same manner, and when at least one reactive functional group A and at least one reactive functional group B are contained in one or more kinds of the third monomer, a dendrimer in which polymer chains are radially grown can be obtained. Further, when at least two reactive functional groups A and at least two reactive functional groups B are contained in one or more kinds of the third monomer, the "imido-network polymer cross-linked with strongly-acidic groups" in which polymer chains are mutually cross-linked can be obtained.

Note that, in cases in which synthesis using two or more kinds of the third monomer is conducted, since a preferable compounding ratio that should be accordingly selected, a suitable compounding ratio for forming a dendrimer, and a suitable compounding ratio for forming a cross-linked network type solid polymer electrolyte are the same as those of the first example, the descriptions thereof are omitted.

Next, a method for manufacturing the "imido-network polymer cross-linked with strongly-acidic groups" according to the present example will be described. The "imido-network polymer cross-linked with strongly-acidic groups" according to the present example can be synthesized by preparing a compound liquid containing one or more kinds of the third monomer and reacting the third monomer. The manufacturing method according to the present example is the same as the first example, except that one or more kinds of the third monomer are used as starting material, and thus the descriptions thereof are omitted.

Next, effects of the "imido-network polymer cross-linked with strongly-acidic groups" according to the present

invention will be described. If one or more kinds of monomer that have reactive functional groups A and/or reactive functional groups B in one molecule and that satisfy predetermined conditions are allowed to react with each other, two monomers bind to each other via one of the reactive functional groups A and one of the reactive functional groups B. An imido group functioning as a strongly-acidic group is formed at the binding point. Thus, the number of acid groups is increased along with the development of polymerization, and therefore, a solid polymer electrolyte having high electric conductivity can be obtained.

Further, as the polymerization proceeds, physical or chemical cross-linking is also formed between polymer chains. Thus, as compared with conventional methods in which polymer electrolyte is used as starting material to cross-link polymer chains, higher crosslink density can be easily obtained. Further, it is possible to improve both electric conductivity and crosslink density at the same time, which has been difficult in accordance with conventional methods, whereby a solid polymer electrolyte excellent in heat resistance and durability can be obtained.

Further, when the composite electrolyte according to the present invention is used as a fuel-cell electrolyte membrane, since physical or chemical cross-linking is formed in the membrane, the outflow of polymer can be suppressed. Further, since swelling/shrinking of the membrane can be suppressed due to cross-linking, it is possible to suppress the decrease in performance attributable to membrane rupture or electrode detachment. Further, since leak of fuel hydrogen attributable to membrane rupture can be also suppressed, fuel consumption of fuel hydrogen is also improved. Especially, since the polymer chains of a cross-linked network type solid polymer electrolyte are chemically cross-linked, even when the number of acid groups is increased, polymer would not outflow, and thus it exhibits high resistance to membrane swelling/shrinking.

Next, a method for manufacturing the first to third monomers used in the manufacture of the "imido-network polymer cross-linked with strongly-acidic groups" will be described. The first to third monomers can be synthesized by using commercially available monomers having molecular structures similar to the first to third monomers as starting materials and conducting a predetermined functional group transformation to the monomers with a publicly known method.

For example, a trifunctional monomer "$FO_2S\text{-}CF_2\text{-}C(F)(SO_2F)\text{-}CF_2\text{-}SO_2F$" having three sulfonyl fluoride groups (halide-based functional groups) can be synthesized in accordance with the procedure indicated by the following formulas.

(1) 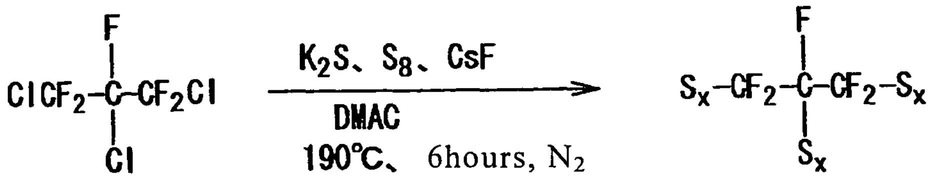


(2) 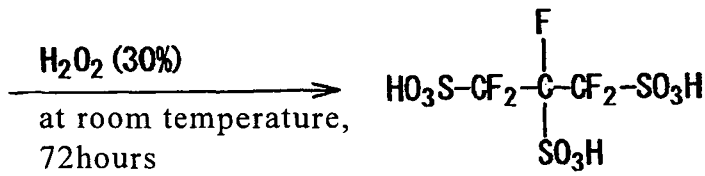


(3) 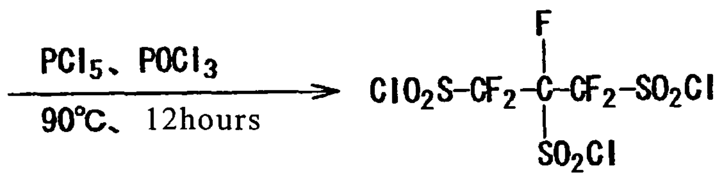

(4)

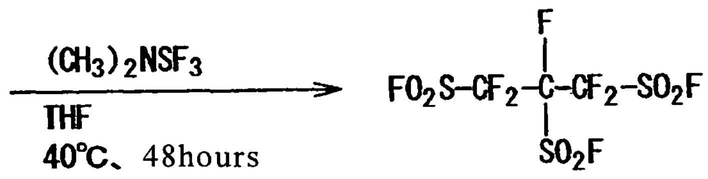


Namely, first, 1g of commercially available monomer "Cl-$CF_2$-C(F)(Cl)-$CF_2$-Cl" is dissolved in 165 g of dimethylacetamide (DMAC). Next, potassium sulfide ($K_2S$, 6.6 g), sulfur (S, 3.6 g), and cesium fluoride (CsF, 0.6 g) are added thereto, and the mixture is agitated at 190°C under a nitrogen atmosphere for 6 hours. Thus, a monomer "$S_x$-$CF_2$-C(F)($S_x$)-$CF_2$-$S_x$" in which sulfur ($S_x$) is substituted for chloride groups can be obtained (reaction formula (1)).

Next, the monomer is immersed in 30% hydrogen peroxide aqueous solution at room temperature for 72 hours. Next, the monomer was treated with normal sulfuric acid at 100°C for 1 hour and washed with ion-exchange water. Thus, a monomer "$HO_3S$-$CF_2$-C(F)($SO_3H$)-$CF_2$-$SO_3H$" in which sulfonic acid groups ($SO_3H$ groups) are substituted for sulfur ($S_x$) at the ends can be obtained (reaction formula (2)).

Next, the monomer is dissolved in solution containing 100g of phosphorus pentachloride ($PCl_5$) and 50 g of phosphorus oxychloride $(POCl_3)_2$, and the monomer was reacted at 90°C for 12 hours. After the reaction, the solvent was removed and the monomer was washed with carbon tetrachloride ($CCl_4$) (60°C, 3 hours, agitation). Thus, a monomer "$ClO_2S$-$CF^2$-C(F)($SO_2Cl$)-$CF_2$-$SO_2Cl$" in which sulfonyl chloride groups ($SO_2Cl$ groups) are substituted for sulfonic acid groups ($SO_3H$ groups) at the ends can be obtained (reaction formula (3)).

The monomer is then dissolved in dry tetrahydrofuran (300 ml) along with 15g of dimethylaminosulfur trifluoride ($(CH_3)_2NSF_3$), and it was then reacted at 45°C for 48 hours, whereby the target monomer "$FO_2S$-$CF_2$-C(F)($SO_2F$)-$CF_2$-$SO_2F$" can be obtained (reaction formula (4)).

Further, for example, a trifunctional monomer "1,3,5-benzenetrisulfonyl chloride" having three sulfonyl chloride groups (halide-based functional groups) can be synthesized in accordance with the procedure indicated by the following formulas.

(1)

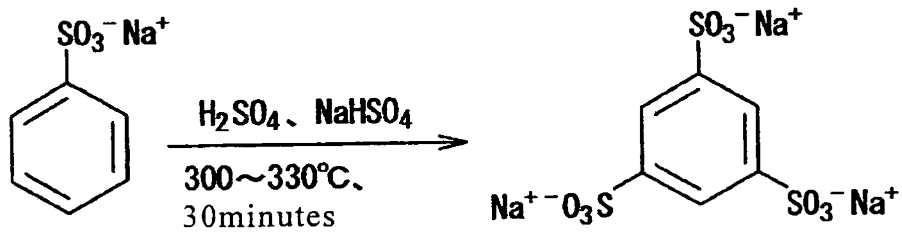


(2)

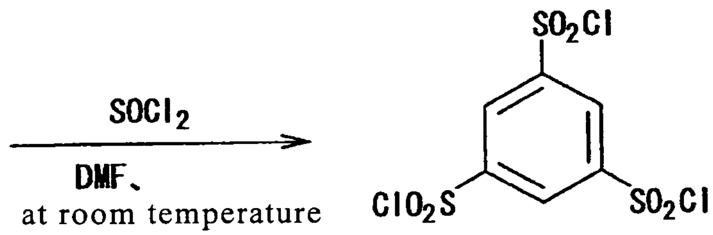


Namely, first, a 3-liter reaction vessel is charged with 495 g of sodium benzenesulfonate salt monohydrate ($C_6H_5SO_3Na \cdot H_2O$) (2.49 mol), 650 g of concentrated sulfuric acid ($H_2SO_4$), and 370.5 g of sodium sulfate ($NaHSO_4$), and they were allowed to react with each other at 300 to 330°C for 30 minutes. After the reaction mixture is cooled, 1.3 L of water and 310 g of sodium hydroxide (NaOH) are added thereto, so as to alkalify the mixture. The mixture is then adjusted to be pH 6 by concentrated sulfuric acid. Activated carbon is added to the mixture, which is then agitated at 70°C for 30 minutes. The mixture is next subjected to hot filtration, and the filtrate is left to stand at 5°C overnight. Precipitated crystals are filtered and the filtrate is concentrated. When crystals start to be precipitated, the filtration is stopped and the crystals are left to stand at 5°C overnight. When the precipitated crystals are filtered and dried, 1,3,5-benzenetrisulfonic acid sodium salt (yield point: 576 g and yield: 60.2%) can be obtained (reaction formula (1)).

Next, a 5-liter reaction vessel is charged with 550 g of 1,3,5-benzenetrisulfonic acid sodium (1.43 mol) and 2.5-liter of thionyl chloride ($SOCl_2$), and 330 ml of DMF is then allowed to fall in drops for 30 minutes at room temperature. After the drop, the content of the vessel is heated to reflux for 12 hours. After the reaction mixture is cooled, 36 kg of ice is poured. The precipitated crystals are then filtered and dried after washing. When obtained coarse crystals are recrystallized with ethyl acetate, the target monomer "1,3,5-benzenetrisulfonyl chloride (yield point: 208 g and yield: 37.8%)" can be obtained (reaction formula (2)).

Other monomers having halide-based functional groups can be similarly synthesized in accordance with a procedure identical or similar to the above procedure. Further, monomers having imide-based functional groups can be obtained by first synthesizing monomers having halide-based functional groups in accordance with a procedure identical or similar to the above procedure, next allowing the monomers to react with ammonia, hexamethyldisilazane (HMDS), lithium hexamethyldisilazane (LiHMDS), and the like, and transforming all or part of the halide-based functional groups into imide-based functional groups.

While the content of the "imido-network polymer cross-linked with strongly-acidic groups" in the composite electrolyte membrane of the present invention is not particularly limited as long as its excellent ion conductivity is not impaired, preferably the content is 40 to 98% by weight with respect to the total quantity of the composite electrolyte membrane. If the content of the "imido-network polymer cross-linked with strongly-acidic groups" in the composite electrolyte membrane is less than the above lower limit, there is a tendency that sufficiently high ion conductivity cannot be obtained when the relative humidity in an atmosphere is less than 1.0. On the other hand, if the content exceeds the above upper limit, there is a tendency that shaping into the shape of a membrane becomes difficult or the strength of membrane decreases.

The composite electrolyte membrane of the present invention having the above structure can obtain sufficiently high ion conductivity at low humidity, as compared with conventional solid electrolytes, even when the relative humidity in an atmosphere is less than 1.0. Thus, it can be suitably used for the electrolyte membrane of a solid polymer fuel cell, the electrolyte of an all solid-state battery, a sensor, or the like.

(Example)

The present invention will be hereafter described in detail based on examples.

[Example 1]

A porous membrane having a pore diameter of 0.01 μm to 1.0 μm, a porosity of 40% to 80%, and a membrane thickness of 15 μm to 50 μm is impregnated with a solution containing a solvent having high wettability and low molecular weight in which monomers that are a starting compound of the "imido-network polymer cross-linked with strongly-acidic groups" are dissolved. After polymerization is conducted in such state, a protonation treatment is conducted, so as to form a composite membrane. If necessary, the polymerization process may be repeated a plurality of times.

In the present example, an HDPE (ultra high molecular weight polyethylene/ manufactured by Teijin Solufill Co./ porosity: 85%, average pore size: 0.3 μm, and membrane thickness: 50 μm) membrane is used as the porous membrane, and the "imido-network polymer cross-linked with strongly-acidic groups" whose representative molecular structure is expressed by the following chemical formula is used as the electrolyte.

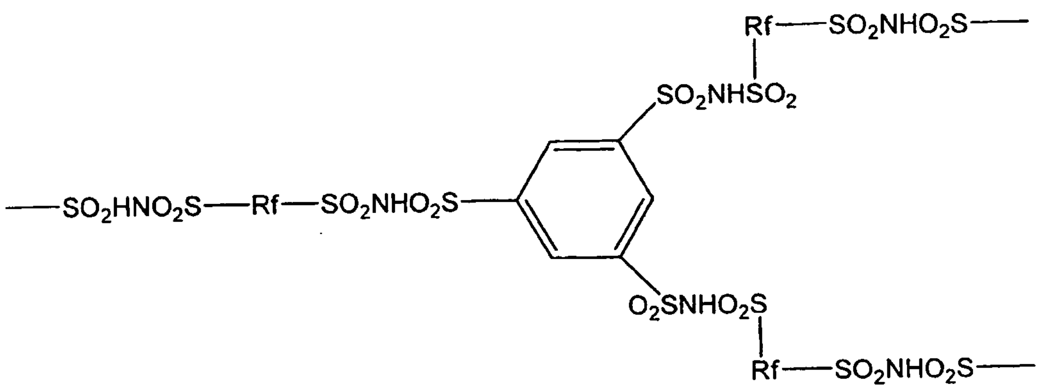

Regarding the "imido-network polymer cross-linked with strongly-acidic groups" expressed by the above chemical formula, specific examples of Rf include a structure entirely or partially containing fluorine atoms, such as - $CF_2CF_2$-, -$CF_2CH_2$-, or -$CFHCH_2$-, or a structure containing them as a repeating unit. Alternatively, -O-(ether linkage), -$CF_3$ (trifluoromethyl group), or -$SO_2$-(sulfonyl group) may be contained therebetween. A specific value of the number of repetitions is 1 to 1000, preferably 3 to 50, and more preferably 3 to 10. Regarding a specific value of the molecular weight, the postsynthetic molecular weight is 10,000 or more, preferably, 100,000 or more, and more preferably 500,000 or more.

Regarding specific examples of crosslinking agent, such agent having a sulfonyl fluoride (F-$SO_2$-$R_f$-) structure at an end of its molecular structure is the most preferable. A carbonyl fluoride (F-CO-$R_f$-) structure may also be preferable. Regarding specific examples of a degree of crosslinking, it is preferable that one benzene structure has one to three cross-linked structures, and one or two cross-linked structures are more preferable in terms of mechanical fragility.

Regarding acid density of the "imido-network polymer cross-linked with strongly-acidic groups," it is preferable that the EW value is 250 to 750, and more preferably 250 to 600. Regarding specific examples of mechanical strength, it is preferable that elongation at yield is 5% to 200% when Young's modulus is 0.1 N/mm$^2$ to 201 N/mm$^2$.

In the present example, first, a solvent (weight ratio MeCN:TEA=4.000(g):5.721(g)) is mixed with a mixture containing two kinds of monomers (weight ratio PPDSF:BTSA=4.088(g):2.715(g)), after one hour of agitation, a certain quantity of MeCN was added, thereby obtaining monomer solution. As used herein, BTSA is a trifunctional monomer (molecular weight : 315, white powder) expressed by the following chemical formula, and

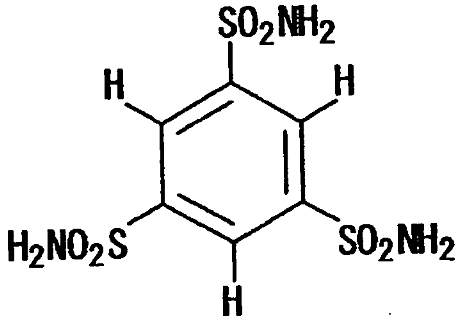

PPDSF is a difunctional monomer "$FO_2S(CF_2)_3SO_2F$" (molecular weight: 316, density: 1.776 g/cm$^3$, transparent liquid).

The HDPE membrane was impregnated with the obtained monomer solution in a vial container, irradiated with ultrasonic waves for three minutes, reacted at 50°C for 24 hours, and heated at 90°C for 24 hours. After agitated in a solution of 15 vol% nitric acid and 85 vol% EtOH for 12 hours (at room temperature), the membrane was agitated in a 15% nitric acid solution (50°C) for 24 hours, whereby a composite membrane was completed.

Regarding the filling rate of the obtained composite membrane, the volume percent with respect to pores was 77%. Further, the conductivity (RH 20%) of the composite membrane was 0.0025 S/cm. The percentage of change in dimension in a planar direction (dry ←→ in water) was 0.5%.

[Comparative Example 1]

As in Example 1, a mixture of monomers and crosslinking agent (PPDSF: BTA=2.69: 4.1 and the solvent acetonitrile: tetraethylamine=4.00:5.69/all of which manufactured by Wako Pure Chemical Industries Ltd. • weight ratio) was prepared and cast on a petri dish. Polymerization was conducted by drying this in a constant-temperature bath at 50°C for 24 hours, and it was then heated at 90°C for 24 hours under reduced pressure, whereby the solvent was removed. At this point, it was changed into gel insoluble matter, and therefore, it became impossible to fill the porous membrane through impregnation.

Thus, the gel insoluble matter was subjected to an acid treatment in a solution of 15 vol% $HNO_3$ and 85 vol% EtOH (both manufactured by Wako Pure Chemical Industries Ltd.) for 24 hours, material obtained after drying the matter for 12 hours was crushed in a mortar, and the crushed material was dispersed in 99% EtOH, so as to impregnate a 20 mm×mm of HDPE porous membrane (product name: 7P03A) manufactured by Teijin Solufill Co. However, an increase in weight around the impregnation was 0.2 mg, and it was about 2% in terms of the rate of filling.

[Example 2]

The composite membrane obtained in Example 1 was again subjected to the filling treatment in the same

manner as in Example 1, so as to obtain a composite membrane that has been filled twice. The obtained composite membrane exhibited the filling rate: 100%, the conductivity (RH 20%): 0.006 S/cm, and the percentage of change in dimension in a planar direction (dry ←→ in water): 4%.

[Example 3]

As in Example 1, heating was initiated at 50°C. Four hours later, nitrogen was flowed into a vial container, and the solvent was distilled away by spending about 30 minutes. As a result, the weight of solution was reduced by about 1 g. After the solution was reacted at 50°C for 24 hours in total, it was heated at 90°C for 24 hours. As in Example 1, a composite membrane was obtained by conducting an acid treatment. The obtained composite membrane exhibited the filling rate: 94%, the conductivity (RH 20%): 0.004 S/cm, and the percentage of change in dimension in a planar direction (dry ←→ in water): 3%.

[Example 4]

As in Example 1, heating was initiated at 50°C. Four hours later, nitrogen was flowed into a vial container, and the solvent was distilled away by spending about 30 minutes. As a result, the weight of solution was reduced by about 1 g. After the solution was reacted at 50°C for 24 hours in total, it was heated at 90°C for 24 hours. As in Example 1, a composite membrane was obtained by conducting an acid treatment. Further, the membrane was again subjected to a filling treatment in accordance with the procedure in Example 3. The obtained composite membrane exhibited the filling rate: 100%, the conductivity (RH 20%): 0.007 S/cm, and the percentage of change in dimension in a planar direction (dry ←→ in water): 6%.

[Example 5]

The membrane obtained in Example 4 was dried at 50°C for 5 hours, immersed in a solution composed of 30 ml of tetrahydrofuran, 3 ml of triethylamine, and 1.5 g of PPDSF, and allowed to stand under nitrogen at 60°C for 50 hours. The treated membrane was immersed in a solvent composed of 3 g of potassium hydroxide, 7 g of dimethyl sulfoxide, 10 g of ion-exchange water at 70°C for 3 hours. After washed with ion-exchange water, the membrane was immersed in 10% hydrochloric acid for 3 hours to be protonated, and was then washed with ion-exchange water, whereby a composite membrane was obtained. The obtained composite membrane exhibited the filling rate: 100%, the conductivity (RH 20%): 0.014 S/cm, and the percentage of change in dimension in a planar direction (dry ←→ in water): 8%.

[Example 6]

1.47 g of BTSA was weighed into a flask containing a porous membrane, and the content of the flask was dried at 140°C under reduced pressure for 3 hours. 82 ml of dewatered tetrahydrofuran (72 g) was injected into the flask with a syringe under the flow of $N_2$ gas at room temperature and the flask was then agitated, so as to prepare a BTSA/THF solution. 8.20 ml of triethylamine (5.99 g) and 31.25 ml of C (2.21 g) were injected thereto with a syringe. The flask was next heated at 50°C for 200 hours. During heating, the membrane was turned into the form of a gel and became solidified in a state in which polymer embedded the porous membrane as it was phase-separated from the solvent, tetrahydrofuran. Subsequently, the composite membrane was retrieved and subjected to the post-treatment as in Example 1. The obtained composite membrane exhibited the filling rate: 100%, the conductivity (RH 20%): 0.010 S/cm, and the percentage of change in dimension in a planar direction (dry ←→ in water): 6%.

[Comparative Example 2]

Examination was conducted using Nafion 112 (trade name). The conductivity (RH 20%): 0.0015 S/cm, and the percentage of change in dimension in a planar direction (dry ←→ in water): 20% were exhibited. Nafion 112 (trade name) exhibited a low conductivity and a large change in dimension between a wet state and a dry state.

The reasons why the filling rate is improved when polymers having different cross-linked structures (rigid/flexible) are mixed and used for impregnation can be considered as follows:

(1) When the order of polymerization is rigid cross-linked polymer → flexible cross-linked polymer:

When rigid cross-linked polymer is first polymerized in pores, since a change in volume occurs due to polymerization→drying in the pores, minute cracks are almost always generated. In such case, it is impossible to fill these cracks by another polymerization of such rigid cross-linked polymer (more cracks would be generated).

Thus, after polymerizing the rigid cross-linked polymer in pores, by polymerizing monomers capable of forming a flexible cross-linked polymer in the same manner, the above cracks can be filled, and pores that could not be filled with the rigid cross-linked polymer can also be filled.

(2) When the order of polymerization is flexible cross-linked polymer → rigid cross-linked polymer:

Alternatively, the opposite order is also effective. When a flexible cross-linked polymer is first polymerized in pores, since the polymer itself can very easily take in liquid (polymer solution, for example), by incorporating the precursor of the rigid cross-linked polymer in the flexible cross-linked polymer and establishing a mutually intertwined network after polymerization, fragility of the rigid cross-linked polymer can be suppressed and thus generation of cracks can be suppressed, whereby improvement in filling rate can be expected.

Hereinafter, Examples 7 to 33 and Comparative Example 3 are described as follows.

1) The following composite membranes each containing in its structure, as an electrolyte, an imido-network polymer (INP) comprising component No. 3 (PPDSA:$H_2NO_2S(CF_2)_3SO_2NH_2$)
2)

- A composite membrane containing, as an electrolyte, an INP having a different structure (with a different molar ratio of three different monomers)
- A composite membrane prepared with the use of a solution at a different concentration (non-MeCN solute volume / solution volume = 57 wt%, 8 wt%, or 65 wt%)
- A composite membrane (with a different composition) prepared under conditions in which the composition of an INP electrolyte used for the 2$^{nd}$ filling differs from that used for the 1$^{st}$ filling
- A composite membrane prepared using, as a porous membrane, an HDPE membrane having a different porosity and a different average pore size
- A composite membrane prepared using, as a porous membrane, a PI membrane
- A composite membrane subjected to bifunctionalization treatment

The mixtures of three different monomers used in Examples 7 to 33 and the weight ratio (molar ratio) of each thereof upon solvent preparation are listed in table 1 below.

Table 1

| Composition | BTSA : PPDSF : PPDSA Weight ratio (molar ratio) | MeCN : TEA | Solution concentration wt% |
|---|---|---|---|
| 1 | 1.575:2.963:0.581 (1:1.875:0.375) | 6.719:3.788 | 57 |
| 2 | 1.260:2.844:0.930 (1:2.25:0.75) | 6.541:3.636 | ↑ |
| 3 | 1.103:2.903:1.221 (1:2.625:1.125) | 6.743:3.712 | ↑ |
| 4 | 0.945:2.844:1.395 (1:3:1.5) | 6.654:3.636 | ↑ |
| 5 | 0.630:2.844:1.860 (1:4.5:3) | 6.767:3.636 | ↑ |
| 6 | 0.473:2.844:2.093 (1:6:4.5) | 6.823:3.636 | ↑ |
| 7 | 2.554:15.365:11.307 (1: 6:4.5) | 12.224:19.671 | 80 |
| 8 | 2.129:12.804:9.422 (1:6:4.5) | 21.941:16.393 | 65 |
| 9 | 2.838:12.804:8.375 (1:4.5:3) | 21.760:16.393 | ↑ |
| 10 | 4.257:12.804:6.282 (1:3:1.5) | 21.396:16.393 | ↑ |

[Examples 7 to 12: The use of a 57% solution]

Mixtures of three different monomers were separately mixed with different solvents (corresponding to compositions 1 to 6), followed by agitation, and thus monomer solutions were obtained. HDPE membranes were separately immersed in the obtained monomer solutions, each of which was contained in a container, followed by ultrasonic irradiation for 1 minute. Each resultant was subjected to reaction at 50°C for a certain period of time (table 2) and heating at 90°C for 24 hr. Then, each membrane was subjected to agitation in 15 vol% hydrochloric acid + 85 vol% EtOH for 12 hr (at room temperature), immersion for 12 hr (at room temperature), agitation in 15 vol% hydrochloric acid + 42.5 vol% EtOH + 42.5 vol% ultrapure water for 12 h (at room temperature), immersion for 12 hr (at room temperature), agitation in 15 vol% hydrochloric acid + 85 vol% ultrapure water for 12 hr (at room temperature), and immersion for 12 hr (at room temperature), in such order. Further, agitation in ultrapure water for 12 hr (at room temperature) for water washing and drying were carried out. Accordingly, composite membranes were obtained.

[Examples 13 to 18: The 2nd filling of the membranes obtained in Examples 7 to 12]

The composite membranes obtained in Examples 7 to 12 were retreated by filling in the same manner as that described in Examples 7 to 12 (the 2nd filling with composition 1, the 2nd filling with composition 2...(and the same applies for the following compositions)). Accordingly, composite membranes subjected to the 2nd filling were obtained.

[Example 19: The use of a 80% solution]

An HDPE membrane and a mixture of two monomers (BTSA and PPDSA) were placed in a container and MeCN was mixed therewith, followed by ultrasonic irradiation for 10 minutes. TEA was added thereto, followed by ultrasonic irradiation for 5 minutes. Further, PPDSF was added thereto (composition 7), followed by ultrasonic irradiation for 10 minutes. Reaction was induced at 50°C for a certain period of time (table 2), followed by heating at 90°C for 24 hr. The resultant was subjected to agitation in 15 vol% hydrochloric acid + 85 vol% EtOH for 12 h (at room temperature), immersion for 12 hr (at room temperature), agitation in 15 vol% hydrochloric acid + 42.5 vol EtOH + 42.5 vol% ultrapure water for 12 h (at room temperature), immersion for 12 h (at room temperature), agitation in 15 vol% hydrochloric acid + 85 vol ultrapure water for 12 h (at room temperature), and immersion for 12 hr (at room temperature). Further, agitation in ultrapure water for 12 hr (at room temperature) for water washing and drying were carried out. Accordingly, a composite membrane was obtained.

[Examples 20 to 22: The use of a 67% solution]

An HDPE membrane and each mixture of two monomers (BTSA and PPDSA) were placed in a container and MeCN was mixed therewith, followed by ultrasonic irradiation for 10 minutes. TEA was added thereto, followed by ultrasonic irradiation for 5 minutes. Further, PPDSF was added thereto (compositions 8 to 10), followed by ultrasonic irradiation for 10 minutes. Reaction was induced at 50°C for a certain period of time (table 2), followed by heating at 90°C for 24 hr. Each resultant was subjected to agitation in 10 vol% sulfuric acid + 90 vol% EtOH for 12 h (at room temperature), immersion for 12 h (at room temperature), agitation in 10 vol% sulfuric acid + 45 vol% EtOH + 45 vol% ultrapure water for 12 h (at room temperature), immersion for 12 h (at room temperature), agitation in 10 vol% sulfuric acid + 90 vol% ultrapure water for 12 hr (at room temperature), and immersion for 12 h (room temperature). Further, agitation in ultrapure water for 12 hr (at room temperature) for water washing and drying were carried out. Accordingly, composite membranes were obtained.

[Examples 23 to 26: The 2nd filling of the membranes obtained in Examples 20 to 22 with compositions differing from those used for the 1st filling depending on Example (with the use of a 67% solution)]

The composite membranes obtained in Examples 20 to 22 were retreated by filling in the same manner as that described in Examples 20 to 22 (with the use of composition 8 (twice), compositions 8 and 10, composition 9 (twice), and the compositions 10 and 8, respectively). Accordingly, composite membranes subjected to the 2nd filling were obtained.

[Examples 27 and 28: The use of HDPE membranes having different porosities and average pore sizes as porous membranes]

The following membranes were used as HDPE membranes. Composite membranes were obtained in the same manner with the use of the same composition as that described in Example 21.

Example 27: HDPE: ultra-high-molecular-weight polyethylene / manufactured by Teijin Solufill Co. / porosity: 88%, average pore size: 0.7 μm, and membrane thickness: 60 μm

Example 28: HDPE: ultra-high-molecular-weight polyethylene / manufactured by Teijin Solufill Co. / porosity: 84%, average pore size: 0.7 μm, and membrane thickness: 50 μm

[Examples 29 and 30: The 2nd filling of the membranes obtained in Examples 27 and 28]

The composite membranes obtained in Examples 27 to 28 were retreated in the same manner as that described in Example 21 by filling. Accordingly, composite membranes subjected to the 2nd filling were obtained.

[Example 31: The use of a PI membrane as a porous membrane]

A membrane (polyimide / manufactured by Ube Industries. Ltd. / porosity: 44%, average pore size: 0.15 μm, and membrane thickness: 27 μm) was used as a porous membrane. A composite membrane was obtained in the same manner with the use of the same composition as that described in Example 22.

[Example 32: The 2nd filling of the membrane obtained in Example 31]

The composite membrane obtained in Example 31 was retreated by filling in the same manner as that described in Example 31. Accordingly, a composite membrane subjected to the 2nd filling was obtained.

[Example 33: Bifunctionalization treatment]

The composite membrane obtained in Example 25 was dried at 60°C for 3 hours and immersed in a solution comprising tetrahydrofuran (90 ml), triethylamine (9 ml), and PPDSF (4.6 g), followed by allowing it to stand in the presence of nitrogen at 50°C for 72 hours. The thus treated membrane was subjected to shaking in tetrahydrofuran for 3 hours (at room temperature), shaking in a 3 vol% sulfuric acid water solution for 12 hr (at room temperature), and immersion for 12 hr (at room temperature). Further, shaking in ultrapure water for 12 hr (at room temperature) for water washing and drying were carried out. Accordingly, a composite membrane was obtained.

Table 2 shows preparation conditions and physical properties for Examples 7 to 33.

Table 2

| Example | Composition | Filling time | 50°C reaction time | Filling rate | Conductivity (RH20%) | Size change |
|---|---|---|---|---|---|---|
| | | | (hours) | (%) | (S/cm) | (%) |
| 7 | 1 | 1 | 24 | 47 | | 6.9 |
| 8 | 2 | 1 | 24 | 65 | | 4.7 |
| 9 | 3 | 1 | 24 | 63 | | 4.7 |
| 10 | 4 | 1 | 72 | 62 | | |
| 11 | 5 | 1 | 120 | 73 | | |
| 12 | 6 | 1 | 168 | 59 | | |
| 13 | 1-1 | 2 | 24 (upon the 2nd filling) | 52 | 0.007 | 9.5 |
| 14 | 2-2 | 2 | 24 (upon the 2nd filling) | 70 | 0.004 | 7.9 |
| 15 | 3-3 | 2 | 24 (upon the 2nd filling) | 84 | 0.004 | 7.9 |
| 16 | 4-4 | 2 | 72 (upon the 2nd filling) | 120 | 0.007 | 7.8 |
| 17 | 5-5 | 2 | 144 (upon the 2nd filling) | 134 | 0.006 | 9.6 |
| 18 | 6-6 | 2 | 336 (upon the 2nd filling) | 100 | 0.015 | 5.8 |
| 19 | 7 | 1 | 120 | 85 | 0.007 | 7.5 |
| 20 | 8 | 1 | 144 | | | 6.3 |

(continued)

| Example | Composition | Filling time | 50°C reaction time | Filling rate | Conductivity (RH20%) | Size change |
|---|---|---|---|---|---|---|
| | | | (hours) | (%) | (S/cm) | (%) |
| 21 | 9 | 1 | 96 | | | 8.3 |
| 22 | 10 | 1 | 72 | | | 11.2 |
| 23 | 8-8 | 2 | 144 (upon the $2^{nd}$ filling) | 103 | 0.009 | 9.6 |
| 24 | 8-10 | 2 | 72 (upon the $2^{nd}$ filling) | 60 | 0.010 | 10.2 |
| 25 | 9-9 | 2 | 96 (upon the $2^{nd}$ filling) | 137 | 0.018 | 11.0 |
| 26 | 10-8 | 2 | 144 (upon the $2^{nd}$ filling) | 110 | 0.017 | 11.0 |
| 27 | 9 | 1 | 96 | | 0.016 | 10.4 |
| 28 | 9 | 1 | 96 | | 0.008 | 13.0 |
| 29 | 9-9 | 2 | 96 (upon the $2^{nd}$ filling) | 95 | 0.017 | 9.3 |
| 30 | 9-9 | 2 | 96 (upon the $2^{nd}$ filling) | 79 | 0.013 | 12.7 |
| 31 | 10 | 1 | 72 | 27 | 0.0004 | 1.7 |
| 32 | 10-10 | 2 | 72 (upon the $2^{nd}$ filling) | | | 5.3 |
| 33 | 9-9 | 2 | 96 (upon the $2^{nd}$ filling) | | 0.009 | |

(Cell evaluation)

A solution obtained by mixing Pt-loaded carbon, a solution of Nafion (trade name), and ethanol was applied to both sides of the composite membrane obtained in Example 25 by spraying, followed by hot pressing at 130°C and 50 kg/cm$^2$ for 6 minutes. Thus, an MEA was obtained. A gas diffusion layer was provided to both sides thereof. The MEA was evaluated in terms of I-V characteristics under conditions consisting of 80°C with humidification using cathode/anode bubblers (20°C/20°C).

For Comparative Example 3, the above solution was applied to a membrane comprising Nafion (trade name) by spraying in the manner described above, followed by hot pressing at 120°C and 50 kg/cm$^2$ for 2 minutes. Thus, an MEA was obtained. Then, cell evaluation was carried out.

Fig. 1 shows the results.

INDUSTRIAL APPLICABILITY

Since the "imido-network polymer cross-linked with strongly-acidic groups" has a rigid backbone structure and poor flexibility, self-sustainability cannot be maintained on its own. However, in accordance with the present invention, a composite electrolyte membrane having self-sustainability can be achieved. Thus, it becomes possible to use the composite electrolyte membrane of the present invention in various fields as a functional membrane. Particularly, the composite electrolyte membrane of the present invention is suitable as a fuel-cell electrolyte membrane, and it has high strength, high proton conductivity, excellent chemical stability, and flexibility (high resistance to deformation). Thus, since a high-performance fuel cell can be realized, the present invention contributes to the practical application and the spread of a fuel cell.

**Claims**

**1.** A composite electrolyte membrane comprising a porous membrane having pores filled with an imido-network polymer cross-linked with strongly-acidic groups, the imido-network polymer being obtained by allowing one or more kinds of a first monomer and one or more kinds of a second monomer that satisfy the following conditions to react with each other, wherein

(1) the first monomer has a molecular weight of 10,000 or less, and n ($n \geqq 2$) reactive functional groups A and/or reactive functional groups B are contained in one molecule,
(2) the second monomer has a molecular weight of 10,000 or less, and m ($m \geqq 3$, $m \neq n$) reactive functional groups A and/or reactive functional groups B are contained in one molecule,
(3) the reactive functional groups A and the reactive functional groups B can form one or more kinds of strongly acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups, and
(4) either one or more kinds of the first monomer or the one or more kinds of the second monomer contain at least one reactive functional group A and at least one reactive functional group B.

**2.** The composite electrolyte membrane according to claim 1, wherein either of each of the reactive functional groups A or each of the reactive functional groups B is composed of $-SO_2X$ or -COX (wherein X represents one or more kinds selected from F, Cl, Br, I, and OH), and the other is composed of $-SO_2NZ_1Z_2$ or - $CONZ_1Z_2$ (wherein each of $Z_1$ and $Z_2$ represents one or more kinds selected from H, M, and $SiMe_3$, and M represents a metal ion).

**3.** The composite electrolyte membrane according to claim 1 or 2, wherein either one or more kinds of the first monomer or one or more kinds of the second monomer contains at least two reactive functional groups A and at least two reactive functional groups B.

**4.** The composite electrolyte membrane according to any one of claims 1 to 3, wherein the first monomer is any one or more kinds selected from monomers (1) to (18) expressed by the following chemical formulas, and the second monomer is any one or more kinds selected from monomers (5) to (8) and (15) to (18) expressed by the following chemical formulas.

(1) $Z_1Z_2NO_2S(CF_2)_mSO_2NZ_1Z_2$ (2) $Z_1Z_2NOC(CF_2)_mCONZ_1Z_2$

(3) $XO_2S(CF_2)_mSO_2X$ (4) $XOC(CF_2)_mCOX$

[wherein m=1 to 20]

(5)

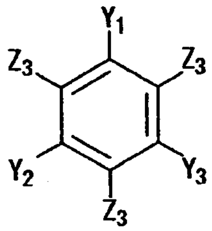

[wherein $Y_1$ $Y_2$, $Y_3$ = $SO_2NZ_1Z_2$, $SO_2X$, $CONZ_1Z_2$, or COX, and $Y_1$=$Y_2$=$Y_3$]

(6) $P_1-CF_2-CFP_2-(CF_2)_A-CFP_3-CF_2-P_4$

(7) $P_1-(CF_2)_A-(CF_2CFP_2)_B-(CF_2)_C-P_3$

(8)

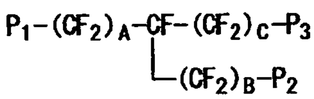

[wherein A=0 to 20, B=1 to 20, and C=1 to 20, $P_1$, $P_2$,
$P_3$, or $P_4$=$SO_2NZ_1Z_2$, $SO_2X$, $CONZ_1Z_2$, or COX, and
$P_1 = P_2 = P_3=P_4$]
[wherein X represents F, Cl, Br, I, or OH, $Z_1$ and $Z_2$ each represent H, M, or $SiMe_3$, M represents a metal ion, and $Z_3$ represents H or F.]

(9) $Z_1Z_2NO_2S(CF_2)_mSO_2X$ (10) $Z_1Z_2NOC(CF_2)_mSO_2X$

(11) $XO_2S(CF_2)_mCOX$ (12) $XOC(CF_2)_mSO_2NZ_1Z_2$

(13) $Z_1Z_2NO_2S(CF_2)_mCONZ_1Z_2$ (14) $Z_1Z_2NOC(CF_2)_mCOX$

[wherein m=1 to 20]

(15)

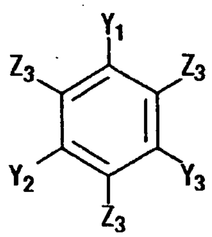

[wherein $Y_1$ $Y_2$, $Y_3$= $SO_2NZ_1Z_2$, $SO_2X$, $CONZ_1Z_2$, or COX, and combinations other than $Y_1=Y_2=Y_3$]

(16) $P_1$-$CF_2$-$CFP_2$-$(CF_2)_A$-$CFP_3$-$CF_2$-$P_4$

(17) $P_1$-$(CF_2)_A$-$(CF_2CFP_2)_B$-$(CF_2)_C$-$P_3$

(18)

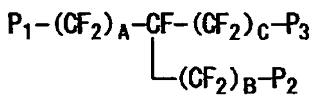

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

**5.** A composite electrolyte membrane comprising a porous membrane having pores filled with an imido-network polymer cross-linked with strongly-acidic groups, the imido-network polymer being obtained by reacting one or more kinds of the third monomer that satisfy the following conditions, wherein

(1) the third monomer has a molecular weight of 10,000 or less, and p ($p \geqq 3$) reactive functional groups A and/or reactive functional groups B are contained in one molecule,
(2) the reactive functional groups A and the reactive functional groups B can form one or more kinds of strongly acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups, and
(3) one or more kinds of the third monomer contain at least one reactive functional group A and at least one reactive functional group B.

**6.** The composite electrolyte membrane according to claim 5, wherein the third monomer is two or more kinds of a monomer containing three reactive functional groups A and/or reactive functional groups B in total in one molecule, and the third monomer contains at least two reactive functional groups A and at least two reactive functional groups B.

**7.** The composite electrolyte membrane according to claim 5, wherein the third monomer is one or more kinds of a monomer containing four or more reactive functional groups A and/or reactive functional groups B in total in one molecule, and the third monomer contains at least two reactive functional groups A and at least two reactive functional groups B.

**8.** The composite electrolyte membrane according to any one of claims 5 to 7,

wherein either of each of the reactive functional groups A or each of the reactive functional groups B is composed of $-SO_2X$ or -COX (wherein X represents one or more kinds selected from F, Cl, Br, I, and OH), and the other is composed of - $SO_2NZ_1Z_2$ or $-CONZ_1Z_2$ (wherein each of $Z_1$ and $Z_2$ represents one or more kinds selected from H, M, and $SiMe_3$, and M represents a metal ion).

**9.** The composite electrolyte membrane according to any one of claims 5 to 8, wherein the third monomer is one or more kinds selected from monomers (5) to (8) and monomers (15) to (18) expressed by the following chemical formulas.

(5) 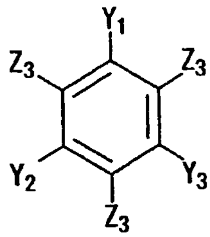

[wherein $Y_1$, $Y_2$, $Y_3$= $SO_2NZ_1Z_2$, $SO_2X$, $CONZ_1Z_2$, or COX, and $Y_1=Y_2=Y_3$]

(6) $P_1-CF_2-CFP_2-(CF_2)_A-CFP_3-CF_2-P_4$

(7) $P_1-(CF_2)_A-(CF_2CFP_2)_B-(CF_2)_C-P_3$

(8) 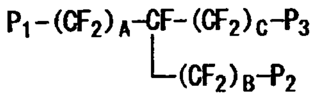

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(15) 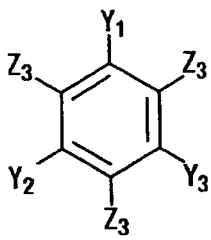

[wherein $Y_1$, $Y_2$, $Y_3$= $SO_2NZ_1Z_2$, $SO_2X$, $CONZ_1Z_2$, or COX, and combinations other than $Y_1=Y_2=Y_3$]

(16) $P_1-CF_2-CFP_2-(CF_2)_A-CFP_3-CF_2-P_4$

(17) $P_1-(CF_2)_A-(CF_2CFP_2)_B-(CF_2)_C-P_3$

(18) 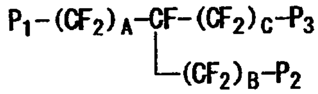

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

**10.** The composite electrolyte membrane according to any one of claims 1 to 9, wherein the crosslink density of the imido-network polymer is 0.1 mmol/g or more.

**11.** The composite electrolyte membrane according to any one of claims 1 to 10, wherein the porous membrane is comprised of one or more kinds selected from polyimide (PI), polyether ether ketone (PEEK), polyethyleneimide (PEI), polysulfone (PSF), polyphenylsulfone (PPSU), polyphenylene sulfide(PPS), polyethylene, polypropylene, and cross-linked polyethylene (CLPE).

**12.** The composite electrolyte membrane according to any one of claims 1 to 10, wherein the porous membrane is comprised of polytetrafluoroethylene (PTFE) expressed by the following general formula or tetrafluoroethylene copolymer containing a copolymerization component of 10 mol% or less,

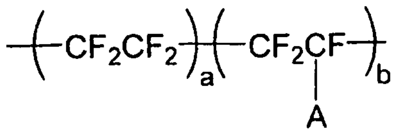

(wherein A represents one or more kinds selected from below, and a:b=1:0 to 9:1)
A= $-CF_3$
$- OCF_3$
$- OCF_2CF_2CF_3$

**13.** The composite electrolyte membrane according to any one of claims 1 to 10, wherein the porous membrane is comprised of polysiloxane, and an organic group in the polysiloxane is at least one kind of group selected from a methyl group, a phenyl group, a hydrogen group, and a hydroxyl group.

**14.** A method for manufacturing a composite electrolyte membrane comprising a porous membrane having pores filled with an imido-network polymer, the method comprising the steps of:

filling pores of a porous membrane with a first monomer and a second monomer that are basic ingredients of an imido-network polymer cross-linked with strongly-acidic groups;
forming the imido-network polymer in the pores of the porous membrane; and
protonating the imido-network polymer

wherein the imido-network polymer cross-linked with strongly-acidic groups is obtained by allowing one or more kinds of the first monomer and one or more kinds of the second monomer that satisfy the following conditions to react with each other:

(1) the first monomer has a molecular weight of 10,000 or less, and n ($n \geqq 2$) reactive functional groups A and/or reactive functional groups B are contained in one molecule;
(2) the second monomer has a molecular weight of 10,000 or less, and m ($m \geqq 3$, $m \neq n$) reactive functional groups A and/or reactive functional groups B are contained in one molecule;
(3) the reactive functional groups A and the reactive functional groups B can form one or more kinds of strongly acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups; and

(4) either one or more kinds of the first monomer or the one or more kinds of the second monomer contain at least one reactive functional group A and at least one reactive functional group B.

**15.** The method for manufacturing a composite electrolyte membrane according to claim 14, wherein either of each of the reactive functional groups A or each of the reactive functional groups B is composed of $-SO_2X$ or -COX (wherein X represents one or more kinds selected from F, Cl, Br, I, and OH), and the other is composed of $-SO_2NZ_1Z_2$ or $-CONZ_1Z_2$ (wherein each of $Z_1$ and $Z_2$ represents one or more kinds selected from H, M, and $SiMe_3$, and M represents a metal ion).

**16.** The method for manufacturing a composite electrolyte membrane according to claim 14 or 15, wherein either one or more kinds of the first monomer or one or more kinds of the second monomer contains at least two reactive functional groups A and at least two reactive functional groups B.

**17.** The method for manufacturing a composite electrolyte membrane according to any one of claims 14 to 16, wherein the first monomer is any one or more kinds selected from monomers (1) to (18) expressed by the following chemical formulas, and the second monomer is any one or more kinds selected from monomers (5) to (8) and (15) to (18) expressed by the following chemical formulas.

(1) $Z_1Z_2NO_2S(CF_2)_mSO_2NZ_1Z_2$ (2) $Z_1Z_2NoC(CF_2)_mCON_1Z_2$

(3) $XO_2S(CF_2)_mSO_2X$ (4) $XOC(CF_2)_mCOX$

[wherein m=1 to 20]

(5)

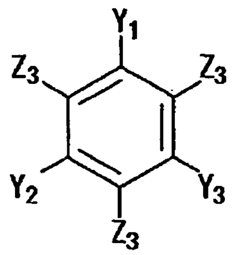

[wherein $Y_1$, $Y_2$, $Y_3$= $SO_2NZ_1Z_2$, $SO_2X$, $CONZ_1Z_2$, or COX, and $Y_1$=$Y_2$=$Y_3$]

(6) $P_1-CF_2-CFP_2-(CF_2)_A-CFP_3-CF_2-P_4$

(7) $P_1-(CF_2)_A-(CF_2CFP_2)_B-(CF_2)_C-P_3$

(8)

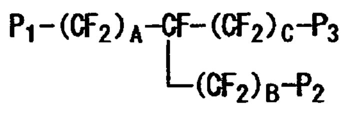

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(9) $Z_1Z_2NO_2S(CF_2)_mSO_2X$ (10) $Z_1Z_2NOC(CF_2)_mSO_2X$

(11) $XO_2S(CF_2)_mCOX$ (12) $XOC(CF_2)_mSO_2NZ_1Z_2$

(13) $Z_1Z_2NO_2S(CF_2)_mCONZ_1Z_2$ (14) $Z_1Z_2NOC(CF_2)_mCOX$

[wherein m=1 to 20] (15)

(15) 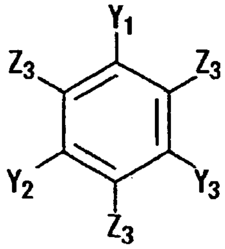

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1$-$CF_2$-$CFP_2$-$(CF_2)_A$-$GFP_3$-$CF_2$-$P_4$

(17) $P_1$-$(CF_2)_A$-$(CF_2CFP_2)_B$-$(CF_2)_C$-$P_3$

(18) 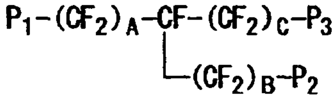

[wherein A=0 to 20, B=1 to 20, and C=1 to 20, $P_1$, $P_2$, $P_3$, or $P_4$=$SO_2NZ_1Z_2$, $SO_2X$, $CONZ_1Z_2$, or COX, and combinations other than $P_1$= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

**18.** A method for manufacturing a composite electrolyte membrane comprising a porous membrane having pores filled with an imido-network polymer, the method comprising the steps of:

filling pores of a porous membrane with a third monomer that is a basic ingredient of an imido-network polymer cross-linked with strongly-acidic groups;
forming the imido-network polymer in the pores of the porous membrane; and
protonating the imido-network polymer

wherein the imido-network polymer cross-linked with strongly-acidic groups is obtained by reacting one or more kinds of the third monomer that satisfies the following conditions:

(1) the third monomer has a molecular weight of 10,000 or less, and p ($p \geqq 3$) reactive functional groups A and/or reactive functional groups B are contained in one molecule;
(2) the reactive functional groups A and the reactive functional groups B can form one or more kinds of strongly acidic bond selected from a bis-sulfonimide group ($-SO_2NHSO_2-$), a sulfoncarbonimide group ($-SO_2NHCO-$), and a biscarbonimide group (-CONHCO-), through the reaction between both reactive functional groups; and
(3) one or more kinds of the third monomer contain at least one reactive functional group A and at least one reactive functional group B.

**19.** The method for manufacturing a composite electrolyte membrane according to claim 18, wherein the third monomer is two or more kinds of a monomer containing three reactive functional groups A and/or reactive functional groups B in total in one molecule, and the third monomer contains at least two reactive functional groups A and at least two reactive functional groups B.

**20.** The method for manufacturing a composite electrolyte membrane according to claim 18, wherein the third monomer is one or more kinds of a monomer containing four or more reactive functional groups A and/or reactive functional groups B in total in one molecule, and the third monomer contains at least two reactive functional groups A and at

least two reactive functional groups B.

**21.** The method for manufacturing a composite electrolyte membrane according to any one of claims 18 to 20, wherein either of each of the reactive functional groups A or each of the reactive functional groups B is composed of $-SO_2X$ or - COX (wherein X represents one or more kinds selected from F, Cl, Br, I, and OH), and the other is composed of $-SO_2NZ_1Z_2$ or $-CONZ_1Z_2$ (wherein each of $Z_1$ and $Z_2$ represents one or more kinds selected from H, M, and $SiMe_3$, and M represents a metal ion).

**22.** The method for manufacturing a composite electrolyte membrane according to any one of claims 18 to 21, wherein the third monomer is one or more kinds selected from monomers (5) to (8) and monomers (15) to (18) expressed by the following chemical formulas.

(5)

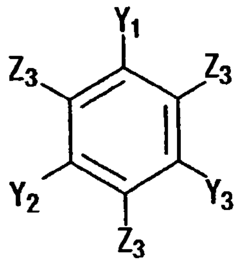

[wherein $Y_1$, $Y_2$, $Y_3$= $SO_2NZ_1Z_2$, $SO_2X$, $CONZ_1Z_2$, or COX, and $Y_1$=$Y_2$=$Y_3$]

(6) $P_1$-$CF_2$-$CFP_2$-$(CF_2)_A$-$CFP_3$-$CF_2$-$P_4$

(7) $P_1$-$(CF_2)_A$-$(CF_2CFP_2)_B$-$(CF_2)_C$-$P_3$

(8)

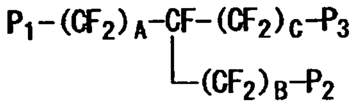

[wherein A=0 to 20, B=1 to 20, and C=1 to 20, $P_1$, $P_2$, $P_3$, or $P_4$=$SO_2NZ_1Z_2$, $SO_{2X}$, $CONZ_1Z_2$, or COX, and P1= $P_2$= $P_3$=$P_4$]
[wherein X represents F, Cl, Br, I, or OH, $Z_1$ and $Z_2$ each represent H, M, or $SiMe_3$, M represents a metal ion, and $Z_3$ represents H or F.]

(15)

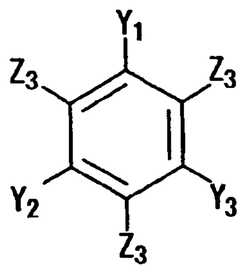

[wherein $Y_1$, $Y_2$, $Y_3$= $SO_2NZ_1Z_2$, $SO_2X$, $CONZ_1Z_2$, or COX, and combinations other than $Y_1$=$Y_2$=$Y_3$]

(16) $P_1$-$CF_2$-$FP_2$-$(CF_2)_A$-$CFP_3$-$CF_2$-$P_4$

(17) $P_1$-$(CF_2)_A$-$(CF_2CFP_2)_B$-$(CF_2)_C$-$P_3$

(18) 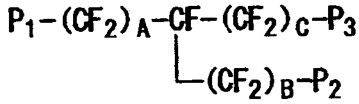

[wherein A=0 to 20, B=1 to 20, and C=1 to 20, $P_1$, $P_2$, $P_3$, or $P_4=SO_2NZ_1Z_2$, $SO_2X$, $CONZ_1Z_2$, or COX, and combinations other than $P_1= P_2= P_3=P_4$]
[wherein X represents F, Cl, Br, I, or OH, $Z_1$ and $Z_2$ each represent H, M, or $SiMe_3$, M represents a metal ion, and $Z_3$ represents H or F.]

**23.** The method for manufacturing a composite electrolyte membrane according to any one of claims 14 to 17, wherein the step of filling with the first monomer and the second monomer and the step of forming the imido-network polymer in the pores of the porous membrane are repeated two or more times.

**24.** The method for manufacturing a composite electrolyte membrane according to any one of claims 14 to 17, wherein the step of filling with the first monomer and the second monomer, the step of forming the imido-network polymer in the pores of the porous membrane, and the step of protonating the imido-network polymer are repeated two or more times.

**25.** The method for manufacturing a composite electrolyte membrane according to any one of claims 18 to 22, wherein the step of filling with the third monomer and the step of forming the imido-network polymer in the pores of the porous membrane are repeated two or more times.

**26.** The method for manufacturing a composite electrolyte membrane according to any one of claims 18 to 22, wherein the step of filling with the third monomer, the step of forming the imido-network polymer in the pores of the porous membrane, and the step of protonating the imido-network polymer are repeated two or more times.

**27.** The method for manufacturing a composite electrolyte membrane according to any one of claims 23 to 26, wherein two or more kinds of polymer is generated by changing a filler monomer each time when repeating the step of filling with the monomer and the step of forming the imido-network polymer in the pores of the porous membrane two or more times.

**28.** The method for manufacturing a composite electrolyte membrane according to claim 27, wherein the method comprises a step of crosslinking molecules of two or more kinds of the polymer.

**29.** The method for manufacturing a composite electrolyte membrane according to claim 27 or 28, wherein ion conductivity of two or more kinds of the polymer differs from each other.

**30.** The method for manufacturing a composite electrolyte membrane according to claim 27 or 28, wherein the cubical expansion rate of two or more kinds of the polymer with respect to water differs from each other.

**31.** The method for manufacturing a composite electrolyte membrane according to claim 27 or 28, wherein a polymer generated at the second time or thereafter has a lower degree of elasticity, a high degree of extensibility, and a higher viscosity than a polymer generated at the first time.

**32.** The method for manufacturing a composite electrolyte membrane according to any one of claims 14 to 31, wherein one or more kinds of method selected from an ultrasonic treatment, a deaeration treatment, a depressurization treatment, and an interface treatment (plasma treatment) is used in the step of filling with the monomer.

**33.** The method for manufacturing a composite electrolyte membrane according to any one of claims 14 to 32, wherein the crosslink density of the imido-network polymer is 0.1 mmol/g or more.

**34.** The method for manufacturing a composite electrolyte membrane according to any one of claims 14 to 33, wherein the porous membrane is comprised of one or more kinds selected from polyimide (PI), polyether ether ketone (PEEK), polyethyleneimide (PEI), polysulfone (PSF), polyphenylsulfone (PPSU), polyphenylene sulfide (PPS), polyethylene, polypropylene, and cross-linked polyethylene (CLPE).

**35.** The method for manufacturing a composite electrolyte membrane according to any one of claims 14 to 33, wherein the porous membrane is comprised of polytetrafluoroethylene (PTFE) expressed by the following general formula or tetrafluoroethylene copolymer containing a copolymerization component of 10 mol% or less,

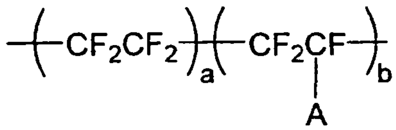

(wherein A represents one or more kinds selected from below, and a:b=1:0 to 9:1)
A = - CF3
- $OCF_3$
- $OCF_2CF_2CF_3$

**36.** The method for manufacturing a composite electrolyte membrane according to any one of claims 14 to 33, wherein the porous membrane is comprised of polysiloxane, and an organic group in the polysiloxane is at least one kind of group selected from a methyl group, a phenyl group, a hydrogen group, and a hydroxyl group.

**37.** A fuel-cell electrolyte membrane comprising the composite electrolyte membrane according to any one of claims 1 to 13.

**38.** A chemical-process membrane comprising the composite electrolyte membrane according to any one of claims 1 to 13.

**39.** A solid polymer fuel cell comprising a membrane-electrode assembly (MEA) composed of (a) a polymer solid electrolyte membrane and (b) a gas diffusion electrode that is bonded to the electrolyte membrane and that has, as its principal constituent materials, a conductive carrier supporting catalytic metal and electrode catalyst formed of a proton-conducting material, wherein the polymer solid electrolyte membrane is the composite electrolyte membrane according to any one of claims 1 to 13.

Fig. 1

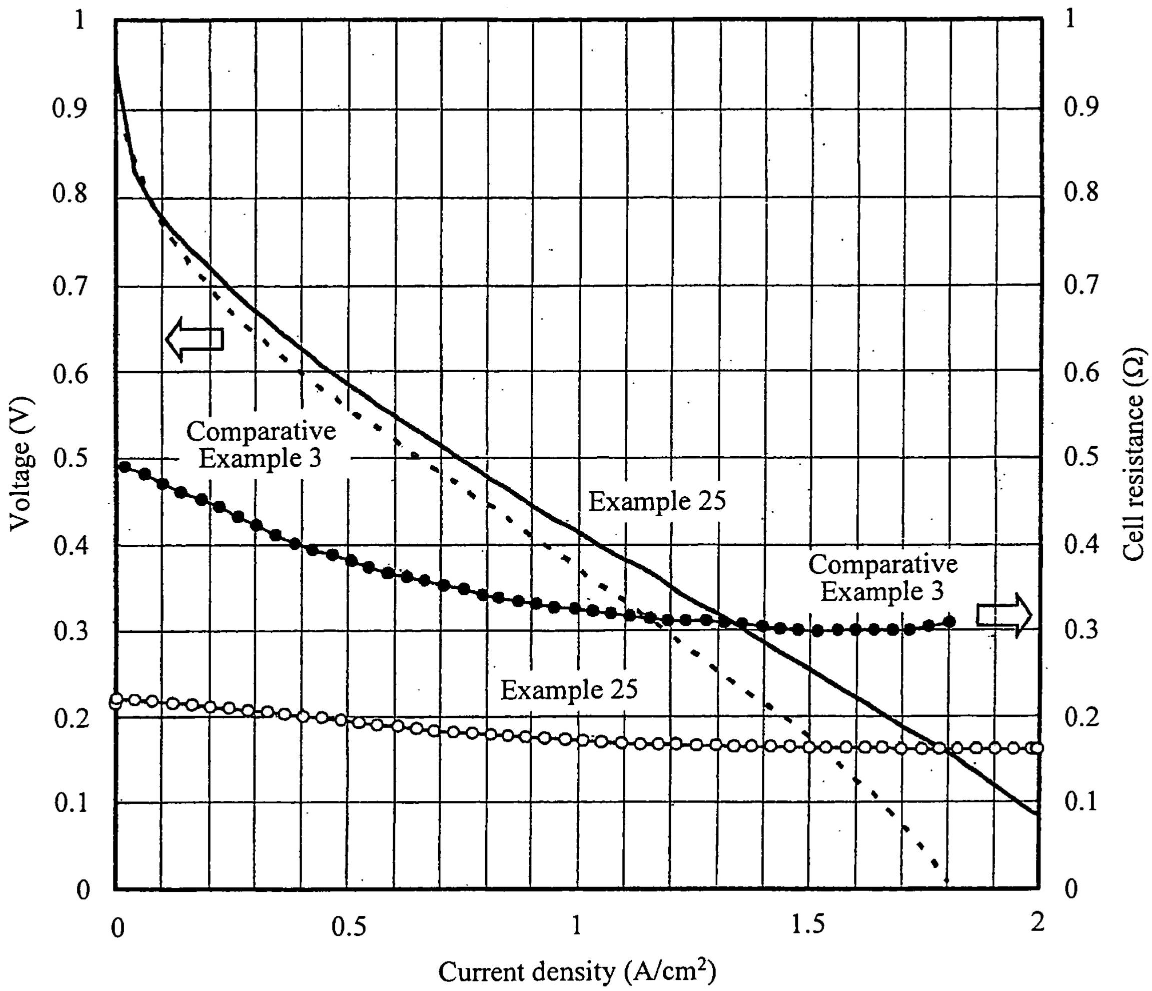
1
0.9
0.8
0.7
0.6
0.5
0.4
0.3
0.2
0.1
0
Voltage (V)
Cell resistance (Ω)
Comparative
Example 3
Example 25
Comparative
Example 3
Example 25
0
0.5
1
1.5
2
Current density (A/cm²)

**INTERNATIONAL SEARCH REPORT**

International application No.
PCT/JP2007/057343

A. CLASSIFICATION OF SUBJECT MATTER
*H01M8/02*(2006.01)i, *C08J5/22*(2006.01)i, *H01B1/06*(2006.01)i, *H01B13/00*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, C08J5/22, H01B1/06, H01B13/00, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 1999/010165 A1 (FOSTER MILLER, INC.), 04 March, 1999 (04.03.99), Full text & JP 2001-514431 A & US 2002/0045085 A1 | 1-39 |
| A | JP 2002-083612 A (Takeo YAMAGUCHI), 22 March, 2002 (22.03.02), Full text (Family: none) | 1-39 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 May, 2007 (25.05.07) | 05 June, 2007 (05.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002246041 A
- JP 2000188013 A
- JP 2002516348 A
- JP 2005174800 A

### Non-patent literature cited in the description

- Kobunshi Kagaku no Kiso. 1978, 250-251